# EUROPEAN PATENT APPLICATION

(11) **EP 1 343 266 A2**
(43) Date of publication of application: **10.09.2003**
(21) Application number: 03100530.9
(22) Date of filing: 04.03.2003
(51) Int. Cl.: H04J 14/08

(54) **Optical transmission apparatus**

(30) Priority: 06.03.2002 JP 2002059632; 07.08.2002 JP 2002230457
(71) Applicant: Nippon Telegraph and Telephone Corporation, Tokyo (JP)
(72) Inventor: Kisaka, Yoshiaki, c/o NTT Int. Property Center, Musashino-shi, Tokyo (JP); Tomizawa, Masahito, c/o NTT Int. Property Center, Musashino-shi, Tokyo (JP); Hirano, Akira, c/o NTT Int. Property Center, Musashino-shi, Tokyo (JP)
(74) Representative: Poulin, Gérard

(57) **Abstract**

This optical transmission apparatus multiplex-modulates a plurality of input electrical signals into an optical signal with a bit rate of A. This apparatus has a light source which supplies an carrier light; an optical divider which divides the carrier light from the light source into N number of carrier lights (where N is an integer); optical modulators which modulate the carrier lights divided in the optical divider with electrical signals, an optical combiner which combines the optical signals from the optical modulator, and devices which convert the input electrical signals to RZ format signals each with a pulse width of 1/A or less, and applies a different delay to each signal, each delay differing sequentially by 1/A, and then inputs the signals to the optical modulator.

## Description

### Field of the Invention

The present invention relates to an optical transmission apparatus which multiplexes a plurality of electric signals, converts these signals to an optical signal, and transmits this optical signal.

This application is based on Japanese Patent Application Nos. 2002-059632 and 2002-230457, the contents of which are incorporated herein by reference.

### Description of the Related Art

Research is proceeding in the bit rate enhancement of individual wavelengths as a way of increasing the capacity of optical transmission paths, due to the fact that this allows the spectral efficiency to be easily improved. In order to promote such acceleration while maintaining a constant transmission distance, a high input optical intensity is required. However, in high speed optical transmission, the deterioration in transmission quality due to a variety of reasons such as signal-to-noise ratio degradation, nonlinear effects, group velocity dispersion (GVD), and polarization mode dispersion (PMD) and the like is a serious problem. Consequently, the RZ (Return-to-Zero) format in which each bit returns to zero is preferred to the NRZ (Non Return-to-Zero) format. In the RZ format, the pulse width of an optical signal does not depend on the signal pattern, and the non-linear resistance is high, making it suitable for high-speed optical transmission. Furthermore, the CS-RZ (Carrier Suppressed Return-to-Zero) format in which the phase of the light inverts for each bit has been proposed (Japanese Patent Application No. 2000-82997). Because the modulation bandwidth in the CS-RZ format is narrow, it has high dispersion tolerance, and is suitable for dense wavelength division multiplexing transmission.

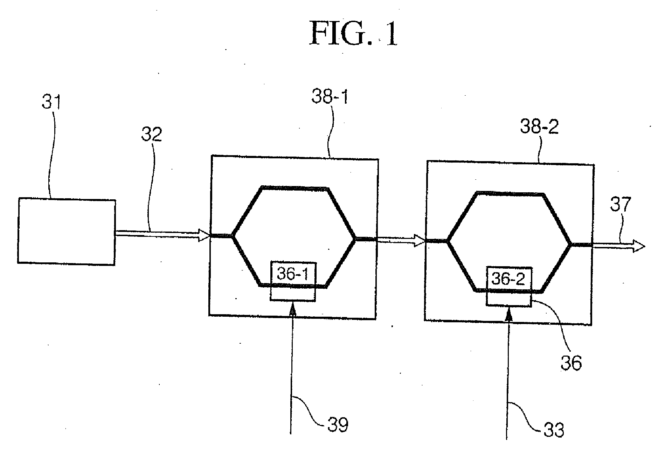

A conventional technique for generating RZ format modulated light is described with reference to FIG. 1. FIG. 1 shows a case in which two Mach-Zehnder optical modulators are connected in a cascade manner, wherein by driving one with a clock signal of a frequency B and the other by a data signal of a bit rate B, an RZ format optical signal is generated. In FIG. 1, a continuous light 32 output from a continuous-wave (CW) light source 31 is modulated by a clock signal 39 input into a modulating electrode 36-1 of the first Mach-Zehnder optical modulator 38-1, and modulated into a 01 alternating pulse light. The pulse light is then modulated by a data signal 33 input into a modulating electrode 36-2 of the second Mach-Zehnder optical modulator 38-2, thereby generating an RZ format optical signal 37.

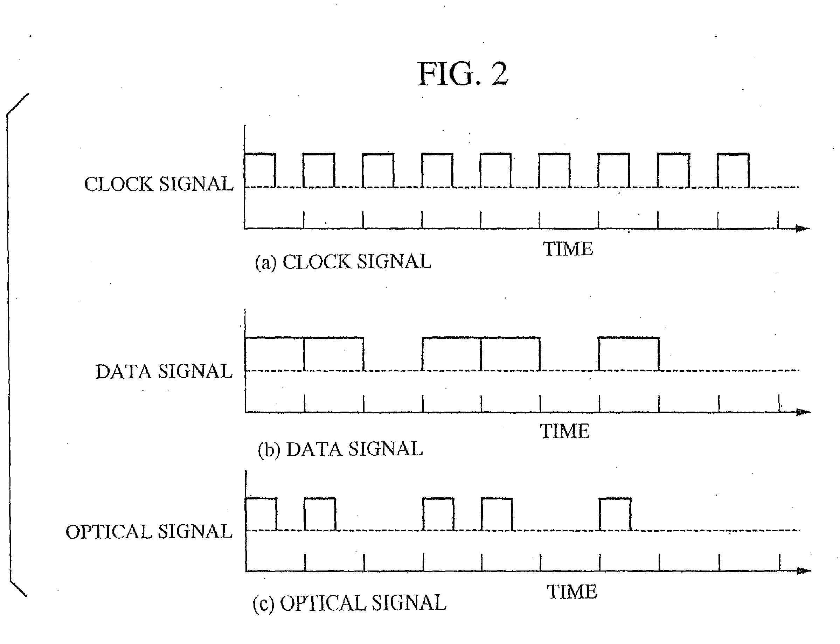

FIG. 2 shows a timing chart of this process. A 01 alternating pulse light of a frequency B is generated from the continuous light, and is modulated by the data signal so as to generate RZ format modulated light.

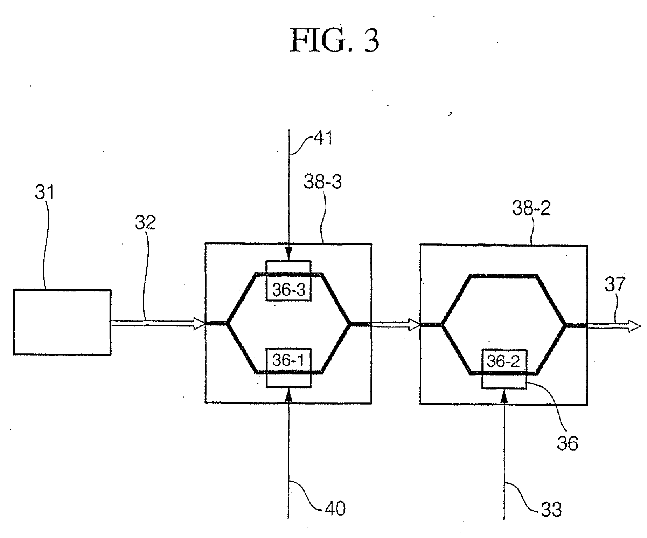

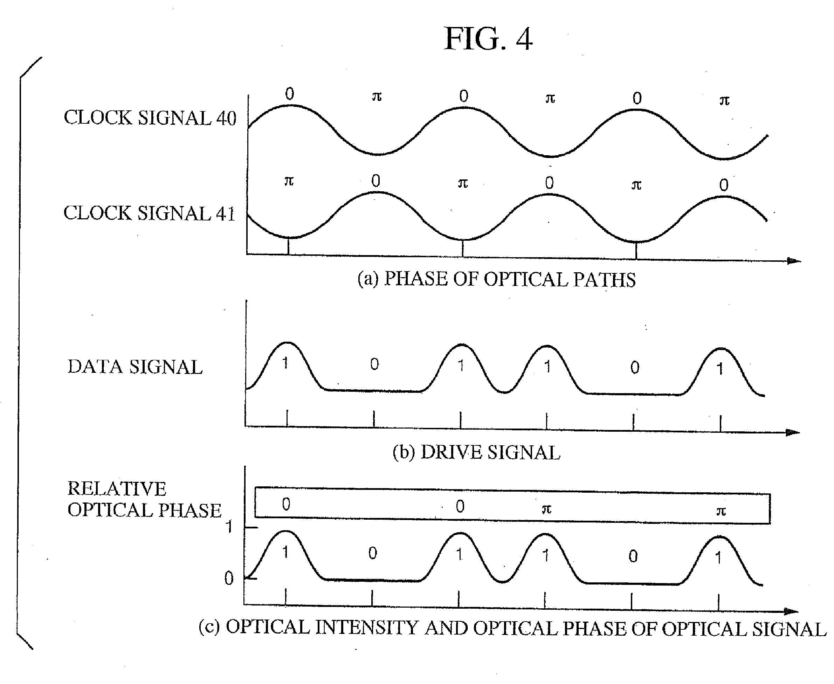

Next, conventional technology for generating CS-RZ format modulated light is described with reference to FIG. 3 and FIG. 4. FIG. 3 and FIG. 4 show the generation of a 01 alternating optical signal in which the phase of the light inverts for every bit, using a clock signal with a frequency of B/2 (where the frequency B = 1/T) which undergoes phase inversion in every timeslot T. In FIG. 3, the continuous light 32 output from the continuous-wave (CW) light source 31 is modulated by a clock signal 40 input into a modulating electrode 36-1 and a clock signal 41 input into a modulating electrode 36-3 in a first push-pull type Mach-Zehnder optical modulator 38-3, and modulated to a 01 alternating pulse light. The clock signal 40 and the clock signal 41 have opposite polarity and peak-to-peak amplitude of Vπ/2, and the frequency of each signal is B/2. The amplitude Vπ refers to a voltage magnitude required to invert (shift by π phases) the phase of the optical signal, and the frequency B is the clock frequency of the data signal 33. The light output from the push-pull type Mach-Zehnder optical modulator 38-3 is modulated to a 01 alternating pulse light in which the phase of the optical signal is inverted in each timeslot. The modulated pulse light is modulated in the Mach-Zehnder optical modulator 38-2 by the data signal 33 input into the modulating electrode 36-2, thereby generating a 01 alternating optical signal 37 in which the phase of the light is inverted in each bit as shown in FIG. 4.

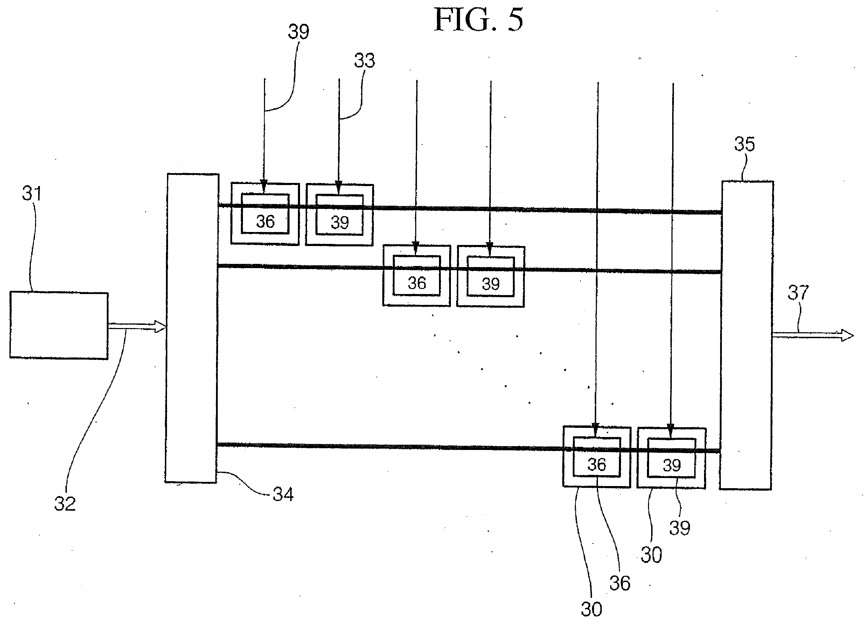

A method of accelerating optical transmission using optical time division multiplexing has also been proposed (Japanese Unexamined Patent Application First Publication No. Hei 10-79705). This method is described here with reference to FIG. 5. The continuous light 32 output from the continuous wave (CW) light source 31 is divided into N light beams by an optical divider 34, and each portion of the divided continuous light 32 is modulated by a first modulator 30 by means of a clock signal 39 of a frequency B input into the modulating electrode 36, thereby obtaining modulated, 01 alternating pulse lights. The pulse lights are modulated in a second modulator 30 by a data signal 33 input into a modulating electrode 39, to obtain optical signals. Here, the data signal 33 and the clock signal are delayed by (T/N) x k (where k is an integer from 1 to N-1). The optical signals are then combined by an optical combiner 35 to produce an optical signal 37. The generated optical signal 37 is a B x N Return-to-zero format optical signal.

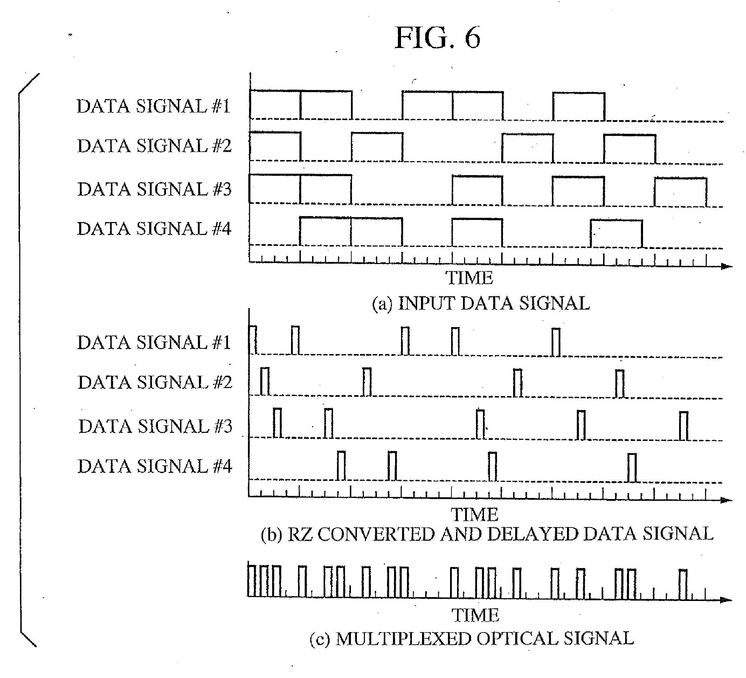

FIG. 6 shows a timing chart of this process. The data signals #1 through #4 are converted to the RZ format optical signal in two modulators. After the optical data signal #2 is delayed by 1/4 timeslots, the optical data signal #3 is delayed by 2/4 timeslots, and the optical data signal #4 is delayed by 3/4 timeslots, the optical signals are combined. Thus the combined optical data signal is a multiplexed signal, in the return-to-zero format.

In order to generate an RZ signal with a bit rate of B x N, an optical modulator with an operating bandwidth of B x N is required, but by providing a phase control device which varies the phases of the optical signals in either even numbered or odd numbered channels by an odd multiple of π when the optical combiner combines the signals, an optical modulator with an operating bandwidth of the bit rate B x N/2 can be used. Because the phase of the light of adjacent bits in the multiplexed signal is inverted, the optical signals cancel each other out in the portions between bits where the pulses overlap. Consequently, it is possible to generate an RZ format optical signal with a bit rate of B × N using an optical modulator with an operating bandwidth of B x N/2. As a result, an RZ format optical signal in which the phase of the light inverts for each bit is generated. However, because the pulse width differs according to the signal pattern, it is not strictly a CS-RZ format optical signal.

Conventionally, when generating return-to-zero format or carrier-suppressed return-to-zero format optical signals, two optical modulators are required, one to modulate the carrier light to a 01 alternating RZ format signal, and one to modulate the carrier light using the data signal. LiNbO₃ (lithium niobate) modulators, in which spreading of the spectrum due to modulation is minimal, are suited to use in very high speed optical transmission systems. However, the miniaturization of such modulators is difficult, and if two are used, a very large amount of space is required for installation, which also increases costs. In addition, when two modulators are connected together, the loss is also doubled. Furthermore, even in optical transmission devices which generate even faster RZ format and CS-RZ format signals using optical time division multiplexing, two optical modulators are required for each channel, and therefore the same problems described above occur.

### SUMMARY OF THE INVENTION

In order to solve the above problems, an object of the present invention is to provide an optical transmission apparatus which can transmit RZ format, NRZ format, alternating phase RZ format, phase modulated NRZ format and CS-RZ format optical signals, using fewer optical modulators than conventional apparatuses.

In order to achieve the object described above, a first aspect of the present invention is an optical transmission apparatus in which a plurality of input electrical signals are multiplex modulated onto an optical signal with a frequency A, comprising an interferometer modulator which comprises a plurality of modulating electrodes on one of the arms thereof, a continuous wave light source which supplies an carrier light to the interferometer modulator, devices which convert the plurality of input electrical signals to RZ format signals each with a pulse width of 1/A or less, applies a different delay to each signal, each delay differing sequentially by 1/A, and then inputs the signals to the modulating electrodes of the interferometer modulator, and a device which applies a half wavelength phase difference to the input light of the interferometer modulator, between the two arms of the interferometer modulator.

A second aspect of the present invention is an optical transmission apparatus in which a plurality of input electrical signals are multiplex modulated onto an optical signal with a bit rate of A, comprising an interferometer modulator which comprises a plurality of modulating electrodes on one of the arms thereof, a continuous wave light source which supplies an carrier light to the interferometer modulator, and devices which convert the plurality of input electrical signals to RZ format signals each with a pulse width of 1 /A or less, and applies a different delay to each signal, each delay differing sequentially by 1/A, and which after inverting the signal polarity of even numbered or odd numbered input electrical signals, inputs the signals to the modulating electrodes of the interferometer modulator.

A third aspect of the present invention is an optical transmission apparatus in which a plurality of input electrical signals are multiplex modulated onto an optical signal with a bit rate of A, comprising an interferometer modulator which comprises a plurality of modulating electrodes on one of the arms thereof, a pulse light source which supplies a pulse light to the interferometer modulator, and devices which convert the plurality of input electrical signals to RZ format signals each with a pulse width of 1 /A or less, and applies a different delay to each signal, each delay differing sequentially by 1/A, and which after inverting the signal polarity of even numbered or odd numbered input electrical signals, inputs the signals to the modulating electrodes of the interferometer modulator.

A fourth aspect of the present invention is an optical transmission apparatus in which a plurality of input electrical signals are multiplex modulated onto an optical signal with a bit rate of A, comprising an interferometer modulator which comprises an equal number of modulating electrodes on each arm thereof, a continuous wave light source which supplies an carrier light to the interferometer modulator, devices which convert the plurality of input electrical signals to RZ format signals each with a pulse width of 1/A or less, applies a different delay to each signal, each delay differing sequentially by 1/A, and then inputs the signals to the modulating electrodes of the interferometer modulator, and a device which applies a half wavelength phase difference to the input light of the interferometer modulator, between the two arms of the interferometer modulator.

A fifth aspect of the present invention is an optical transmission apparatus in which a plurality of input electrical signals are multiplex modulated onto an optical signal with a bit rate of A, comprising an interferometer modulator which comprises an equal number of modulating electrodes on each arm thereof, a pulse light source which supplies a pulse light to the interferometer modulator, devices which convert the plurality of input electrical signals to RZ format signals each with a pulse width of 1/A or less, applies a different delay to each signal, each delay differing sequentially by 1/A, and then inputs the signals to the modulating electrodes of the interferometer modulator, and a device which applies a half wavelength phase difference to the input light of the interferometer modulator, between the two arms of the interferometer modulator.

A sixth aspect of the present invention is an optical transmission apparatus in which a plurality of input electrical signals are multiplex modulated onto an optical signal with a bit rate of A, comprising an interferometer modulator which comprises an equal number of modulating electrodes on each arm thereof, a continuous wave light source which supplies an carrier light to the interferometer modulator, and devices which convert the plurality of input electrical signals to RZ format signals each with a pulse width of 1 /A or less, and applies a different delay to each signal, each delay differing sequentially by 1/A, and which after inverting the signal polarity of even numbered or odd numbered input electrical signals, inputs the signals to the modulating electrodes of the interferometer modulator.

A seventh aspect of the present invention is an optical transmission apparatus in which a plurality of input electrical signals are multiplex modulated onto an optical signal with a bit rate of A, comprising an interferometer modulator which comprises an equal number of modulating electrodes on each arm thereof, a pulse light source which supplies a pulse light to the interferometer modulator, and devices which convert the plurality of input electrical signals to RZ format signals each with a pulse width of 1 /A or less, and applies a different delay to each signal, each delay differing sequentially by 1/A, and which after inverting the signal polarity of even numbered or odd numbered input electrical signals, inputs the signals to the modulating electrodes of the interferometer modulator.

According to the aspects of the invention set forth in the first aspect to the seventh aspect described above, it is possible to perform multiplex modulation of a plurality of data signals using only one Mach-Zehnder optical modulator or Mach-Zehnder optical modulators fewer than in conventional optical transmission apparatuses, and furthermore, it is possible to reduce optical loss in comparison with conventional optical transmission apparatuses.

An eighth aspect of the present invention is an optical transmission apparatus in which a plurality of input electrical signals are multiplex modulated onto an optical signal with a bit rate of A, comprising a continuous wave light source which supplies an carrier light, an optical divider which divides the carrier light from the continuous wave light source into N number of carrier lights (where N is an integer), N number of optical modulators which modulate each divided carrier light divided in the optical divider with an electrical signal, an optical combiner which combines the optical signals from the N number of optical modulators, and a device which converts the N input electrical signals to RZ format signals each with a pulse width of 1/A or less, applies a different delay to each signal, each delay differing sequentially by 1/A, and then inputs the signals to the optical modulators.

A ninth aspect of the present invention is an optical transmission apparatus in which a plurality of input electrical signals are multiplex modulated onto an optical signal with a bit rate of A, comprising a continuous wave light source which supplies an carrier light, an optical divider which divides the carrier light from the continuous wave light source into N number of carrier lights (where N is an integer), N number of optical modulators which modulate each divided carrier light divided in the optical divider with an electrical signal, optical delays which apply a different delay to each signal from the N number of optical modulators, each delay differing sequentially by 1/A, an optical combiner which combines the optical signals from the optical delays, and devices which after converting the N input electrical signals to RZ format signals each with a pulse width of 1/A or less, input the signals to the optical modulators.

A tenth aspect of the present invention is an optical transmission apparatus in which a plurality of input electrical signals are multiplex modulated onto an optical signal with a bit rate of A, comprising a continuous wave light source which supplies an carrier light, an optical divider which divides the carrier light from the continuous wave light source into N number of carrier lights (where N is an integer), N number of optical modulators which modulate each divided carrier light divided in the optical divider with an electrical signal, optical phase shifters which shift the phase of the light of the optical signals from the N number of optical modulators so as to generate a half period phase difference between even numbered signals and odd numbered signals, an optical combiner which combines the optical signals from the optical phase shifters, and a device which converts the N input electrical signals to RZ format signals each with a pulse width of 1/A or less, applies a different delay to each signal, each delay differing sequentially by 1/A, and then inputs the signals to the optical modulators.

An eleventh aspect of the present invention is an optical transmission apparatus in which a plurality of input electrical signals are multiplex modulated onto an optical signal with a bit rate of A, comprising a continuous wave light source which supplies an carrier light, an optical divider which divides the carrier light from the continuous wave light source into N number of carrier lights (where N is an integer), N number of optical modulators which modulate each divided carrier light divided in the optical divider with an electrical signal, optical phase shifters which shift the optical phase of either even numbered signals or odd numbered signals received from the N number of optical modulators by an odd multiple of a half period, an optical combiner which combines the optical signals from the optical phase shifters, and a device which converts the N input electrical signals to RZ format signals each with a pulse width of 1/A or less, applies a different delay to each signal, each delay differing sequentially by 1/A, and then inputs the signals to the optical modulators.

A twelfth aspect of the present invention is an optical transmission apparatus in which a plurality of input electrical signals are multiplex modulated onto an optical signal with a bit rate of A, comprising a continuous wave light source which supplies an carrier light, an optical divider which divides the carrier light from the continuous wave light source into N number of carrier lights (where N is an integer), N number of optical modulators which modulate each divided carrier light divided in the optical divider with an electrical signal, optical delays which apply a different delay to each signal from the N number of optical modulators, each delay differing sequentially by 1/A, optical phase shifters which shift the optical phase of optical signals received from the optical delays so as to generate a difference of a half period between even numbered signals and odd numbered signals, an optical combiner which combines the optical signals from the optical phase shifters, and devices which after converting the N input electrical signals to RZ format signals each with a pulse width of 1/A or less, input the signals to the optical modulators.

A thirteenth aspect of the present invention is an optical transmission apparatus in which a plurality of input electrical signals are multiplex modulated onto an optical signal with a bit rate of A, comprising a continuous wave light source which supplies an carrier light, an optical divider which divides the carrier light from the continuous wave light source into N number of carrier lights (where N is an integer), N number of optical modulators which modulate each divided carrier light divided in the optical divider with an electrical signal, optical delays which apply a different delay to each signal from the N number of optical modulators, each delay differing sequentially by 1/A, optical phase shifters which shift the optical phase of either even numbered signals or odd numbered signals received from the optical delays by an odd multiple of a half period, an optical combiner which combines the optical signals from the optical phase shifters, and devices which after converting the N input electrical signals to RZ format signals each with a pulse width of 1/A or less, input the signals to the optical modulators.

In the eighth aspect to the thirteenth aspect described above, by using only one optical modulator or fewer optical modulators in the parallel processing of each optical signal, it is possible to reduce the number of optical modulators and reduce optical loss in comparison with conventional optical transmission apparatuses.

According to the aspects described above, with the present invention it is possible to perform multiplex and modulate high speed optical signals in various formats using fewer modulators and with a simpler construction than conventional optical transmission apparatuses. Furthermore, it is possible to reduce optical loss in comparison with conventional constructions.

### BRIEF DESCRIPTION OF THE DRAWINGS

FIG. 1 is a diagram showing the construction of a conventional optical transmission apparatus.
FIG. 2 is a diagram showing the operation of a conventional optical transmission apparatus.
FIG. 3 is a diagram showing the construction of a conventional optical transmission apparatus.
FIG. 4 is a diagram showing the operation of a conventional optical transmission apparatus.
FIG. 5 is a diagram showing the construction of a conventional optical transmission apparatus.
FIG. 6 is a diagram showing the operation of a conventional optical transmission apparatus.
FIG. 7 is a diagram showing the construction of an optical transmission apparatus of the present invention.
FIG. 8 is a diagram showing principles of operation of an optical transmission apparatus of the present invention.
FIG. 9 is a diagram showing principles of operation of an optical transmission apparatus of the present invention.
FIG. 10 is a diagram showing the operation of the optical transmission apparatus of the present invention
FIG. 11 is a diagram showing the operation of the optical transmission apparatus of the present invention.
FIG. 12 is a diagram showing the construction of an optical transmission apparatus of the present invention.
FIG. 13 is a diagram showing principles of operation of the optical transmission apparatus of the present invention.
FIG. 14 is a diagram showing principles of operation of the optical transmission apparatus of the present invention.
FIG. 15 is a diagram showing the construction of an optical transmission apparatus of the present invention.
FIG. 16 is a diagram showing principles of operation of the optical transmission apparatus of the present invention.
FIG. 17 is a diagram showing principles of operation of the optical transmission apparatus of the present invention.
FIG. 18 is a diagram showing the construction of an optical transmission apparatus of the present invention.
FIG. 19 is a diagram showing principles of operation of the optical transmission apparatus of the present invention.
FIG. 20 is a diagram showing principles of operation of the optical transmission apparatus of the present invention.
FIG. 21 is a diagram showing an output waveform of the optical transmission apparatus of the present invention.
FIG. 22 is a diagram showing the construction of an optical transmission apparatus of the present invention.
FIG. 23 is a diagram showing principles of operation of the optical transmission apparatus of the present invention.
FIG. 24 is a diagram showing principles of operation of the optical transmission apparatus of the present invention.
FIG. 25 is a diagram showing the construction of an optical transmission apparatus of the present invention
FIG. 26 is a diagram showing principles of operation of the optical transmission apparatus of the present invention.
FIG. 27 is a diagram showing principles of operation of the optical transmission apparatus of the present invention.
FIG. 28 is a diagram showing the spectrum of an output signal of the optical transmission apparatus of the present invention.
FIG. 29 is a diagram showing an output waveform of the optical transmission apparatus of the present invention.
FIG. 30 is a diagram showing the spectrum of an output signal of the optical transmission apparatus of the present invention.
FIG. 31 is a diagram showing an output waveform of the optical transmission apparatus of the present invention.
FIG. 32 is a diagram showing an output waveform of the optical transmission apparatus of the present invention.
FIG. 33 is a diagram showing the construction of an optical transmission apparatus of the present invention.
FIG. 34 is a diagram showing principles of operation of the optical transmission apparatus of the present invention.
FIG. 35 is a diagram showing principles of operation of the optical transmission apparatus of the present invention.
FIG. 36 is a diagram showing the construction of an optical transmission apparatus of the present invention
FIG. 37 is a diagram showing the construction of an optical transmission apparatus of the present invention.
FIG. 38 is a diagram showing the construction of an optical transmission apparatus of the present invention.
FIG. 39 is a diagram showing principles of operation of the optical transmission apparatus of the present invention.
FIG. 40 is a diagram showing the construction of an optical transmission apparatus of the present invention.
FIG. 41 is a diagram showing the construction of an optical transmission apparatus of the present invention.
FIG. 42 is a diagram showing the construction of an optical transmission apparatus of the present invention.
FIG. 43 is a diagram showing the construction of an optical transmission apparatus of the present invention.
FIGS. 44A to 44C are diagrams showing principles of operation of the optical transmission apparatus of the present invention.
FIG. 45 is a diagram showing the construction of an optical transmission apparatus of the present invention.
FIG. 46 is a diagram showing the construction of an optical transmission apparatus of the present invention.
FIGS. 47A to 47C are diagrams showing principles of operation of the optical transmission apparatus of the present invention.
FIG. 48A and 48B are diagrams showing an example of a signal spectrum and a signal waveform of the optical transmission apparatus of the present invention.
FIGS. 49A and 49B are diagrams showing the construction of an optical transmission apparatus of the present invention.
FIGS. 50A and 50B are diagrams showing principles of operation of the optical transmission apparatus of the present invention.
FIG. 51 is a diagram showing the construction of an optical transmission apparatus of the present invention.
FIGS. 52A to 52C are diagrams showing principles of operation of the optical transmission apparatus of the present invention.

### DESCRIPTION OF PREFERRED EMBODIMENTS

As follows is a description of embodiments of the present invention, with reference to the appended drawings.

### (Embodiment 1)

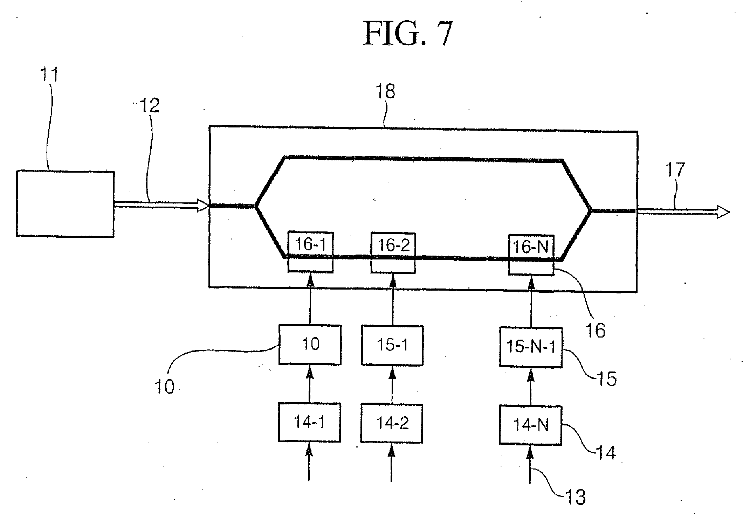

An embodiment according to a first aspect of the present invention is shown in FIG. 7. This optical transmission apparatus comprises a continuous wave light source 11 which outputs an carrier light, a Mach-Zehnder optical modulator 18 which comprises N (where N is an integer of 2 or greater) modulating electrodes 16-1 to 16-N, N number of RZ converters 14-1 to 14-N which convert NRZ format data signals to an RZ format, delays 15-1 to 15-(N-1) which apply a delay of (1/A) x k to the data signals in each channel from 2 to N, respectively, and a bias circuit 10 which applies a bias of Vπ to one of the arms of the Mach-Zehnder optical modulator 18, thereby functioning as a device which applies a half wavelength phase difference to the input light of the interferometer modulator between the two arms of the interferometer modulator. Here, A is the bit rate of an optical signal 17, k is an integer between 1 and N-1, and Vπ is the drive voltage required to shift the phase of the input light by a half wavelength. In this example, the bias circuit 10 is provided on the arm where the data signals are modulated, but the bias circuit 10 may also be provided on the opposite arm, and apply a voltage of V_{π} to this opposite arm. Alternatively, voltages of+Vπ/2 and -Vπ/2 may be applied to each arm, respectively. Furthermore, the order of connection of the delays 15 and the RZ converters 14 may be changed.

The carrier light 12 from the continuous wave light source 11 is input into the Mach-Zehnder optical modulator 18. A bias of V_{π} is applied to one arm of the Mach-Zehnder optical modulator 18 by the bias circuit 10. The data signals 13 of channels 1 to N are converted by the RZ converters 14-1 to 14-N to RZ format signals, each with a pulse width of 1/A or less, that is a duty of 1/N or less. If the pulse width is 1/A, the resulting optical signal 17 is an NRZ format signal, and if the pulse width is 1/(2A), the resulting optical signal 17 is an RZ format signal with a duty of 50%. The applied voltage amplitude may be Vπ peak-to-peak. In addition, after each signal has been delayed by (1/A) x k by the delays 15-1 to 15-(N-1), the signals are modulated by the modulating electrodes 16-1 to 16-N of the Mach-Zehnder optical modulator 18, thereby generating an optical signal 17 with a bit rate of A. In the present embodiment, there is no delay connected to the modulating electrode 16-1, but a delay may be connected to every modulating electrode in order to apply a delay difference of 1/A to each signal.

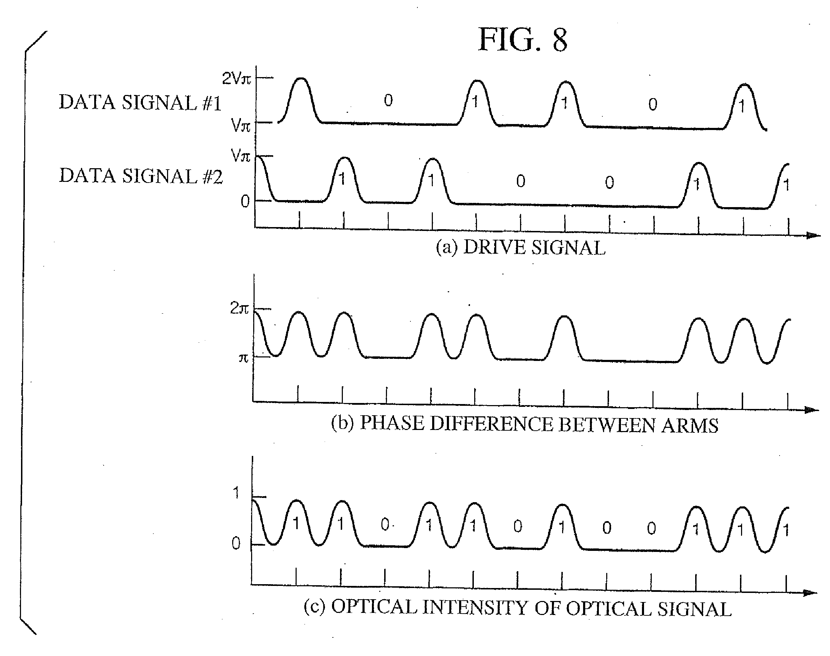

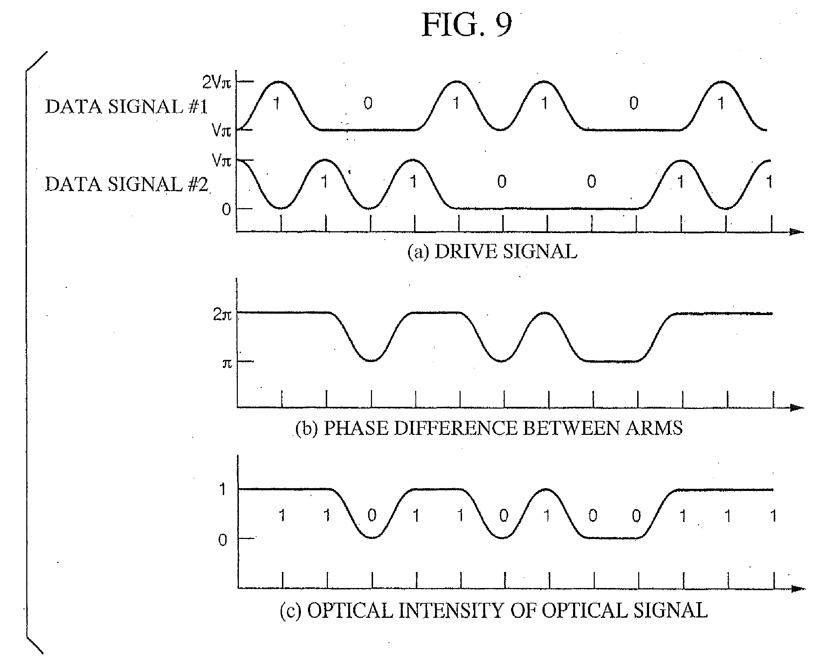

The principles of the multiplex modulation performed in the present optical transmission apparatus are shown in FIG. 8 and FIG. 9. Each figure shows an example in which multiplex modulation of two data signals is performed. FIG. 8 shows a case in which the signals are converted to RZ (Return-to-Zero) format signals with a pulse width of 1/(2A), that is a duty of 1/(2N), by the RZ converters 14-1 to 14-N. Because a bias of Vπ is applied to one of the arms of the Mach-Zehnder optical modulator 18, when both signals are "0", the phase difference between the arms is π, and the optical signal is "0". If either of the data signals is "I", the phase difference between the arms is 2π, and the optical signal is "1". As a result, the resulting multiplex modulated optical signal is an RZ format signal with a duty of 50%.

FIG. 9 shows a case in which the signals are converted to RZ (Return-to-Zero) format signals with a pulse width of 1/A, that is a duty of 1/N, by the RZ converters 14-1 to 14-N. Following the same operation as in FIG. 8, the resulting multiplex modulated optical signal is a NRZ format signal with a duty of 100%.

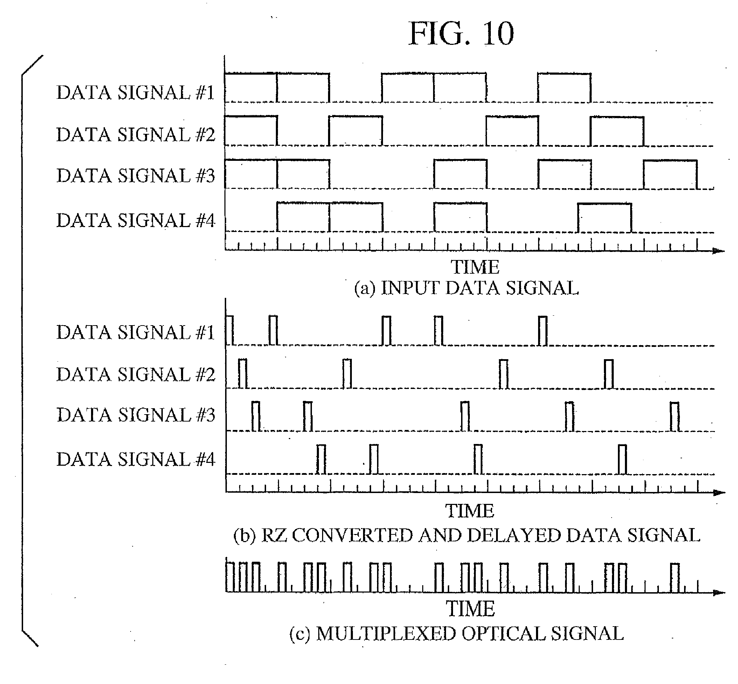

A timing chart showing a case in which multiplex modulation of four data signals is performed is shown in FIG. 10. In this example, data signals each with a bit rate of A/4 are multiplexed. The four data signals #1 to #4 are converted to RZ format signals with a duty of 1/(2N) = 1/8, and a different delay is applied to each signal, each delay differing sequentially by 1/A. Once these signals are applied to the modulating electrodes 16-1 to 16-N of the Mach-Zehnder optical modulator 18, modulated light is output with a duty of 50% and a bit rate of A.

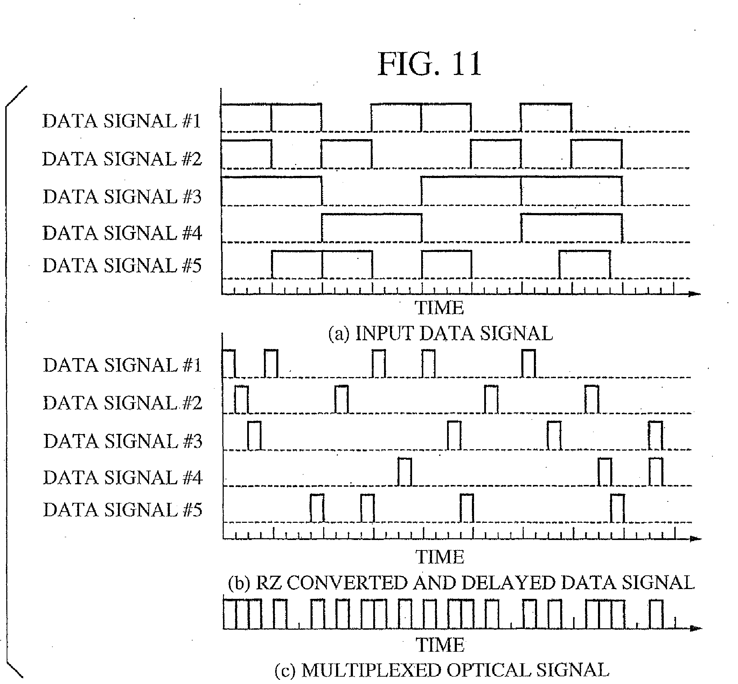

In the present embodiment, it is also possible to multiplex data signals with different bit rates. A timing chart of such a situation is show in FIG. 11. FIG. 11 shows an example in which the data signals #1, #2 and #5 are converted to RZ format signals with a duty of 1/N = 1/4, at a bit rate ofA/4, and the data signals #3 and #4 are converted to RZ format signals with a duty of IN = 1/4, at a bit rate of A/8. When the data signals #3 and #4 are converted to RZ format signals, they are multiplexed in the same manner as the other signals by being blanked at half the frequency of the other signals. As a result, modulated light is generated in the NRZ format with a bit rate of A and a duty of 100%.

As described above, in the optical transmission apparatus described in the present embodiment, it was possible to perform multiplex modulation of a plurality of data signals into an RZ format or NRZ format optical signal using fewer Mach-Zehnder optical modulators than in conventional optical transmission apparatuses. As a result, it was also possible to reduce optical loss from the case in which multiplex modulation of the signals was performed with conventional Mach-Zehnder optical modulators in a cascading connection.

### (Embodiment 2)

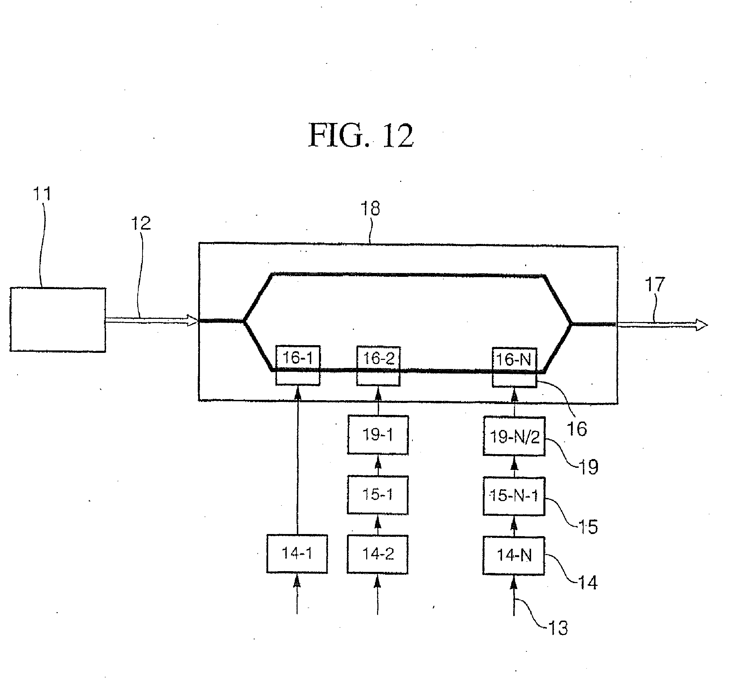

An embodiment according to a second aspect of the present invention is shown in FIG. 12. This optical communication apparatus comprises a continuous wave light source 11 which outputs an carrier light, a Mach-Zehnder optical modulator 18 which comprises N (where N is an even number of 2 or greater) modulating electrodes 16-1 to 16-N, N number of RZ converters 14-1 to 14-N which convert NRZ format data signals to RZ format signals, delays 15-1 to 15-(N-1) which apply a delay of (1/A) x k to the data signals in the channels 2 to N, respectively, and signal polarity inverters 19 which invert the polarity of the even numbered data signals. Here, A is the bit rate of an optical signal 17, and k is an integer between 1 and N-1. In this example, the signal polarity inverters 19 were provided for the even numbered data signals, but they may be provided for the odd numbered data signals. Furthermore, the order of connection of the signal polarity inverters 19, the delays 15 and the RZ converters 14 may also be changed.

An carrier light 12 from the continuous wave light source 11 is input into the Mach-Zehnder optical modulator 18. The data signals 13 of channels 1 to N are each converted to RZ (Return-to-Zero) format signals with a pulse width of 1/A or less, that is a duty of 1/N or less, by the RZ converters 14-1 to 14-N. If the pulse width is 1/A, the resulting data signals of the optical signal 17 are RZ format signals with varying duties, and if the pulse width is 1/(2A), the resulting data signals of the optical signal 17 are RZ format signals with a duty of 50%. The applied voltage amplitude may be V_{π} peak-to-peak. In addition, after the signals have been delayed by (1/A) x k by the delays 15-1 to 15-(N-1), respectively, and the signal polarity of the even numbered data signals has been inverted, the signals are modulated by the modulating electrodes 16-1 to 16-N of the Mach-Zehnder optical modulator 18, thereby generating an optical signal 17 with a bit rate of A.

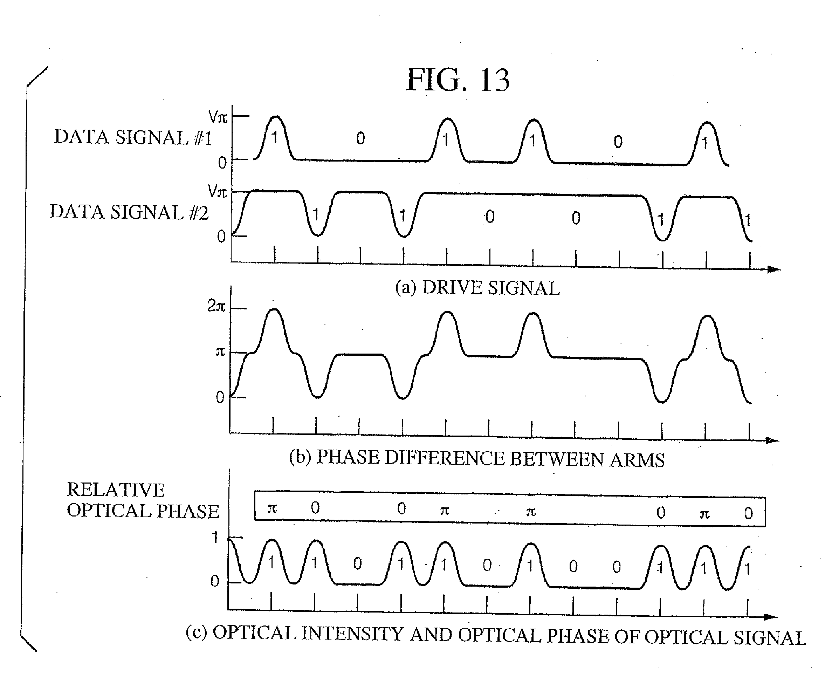

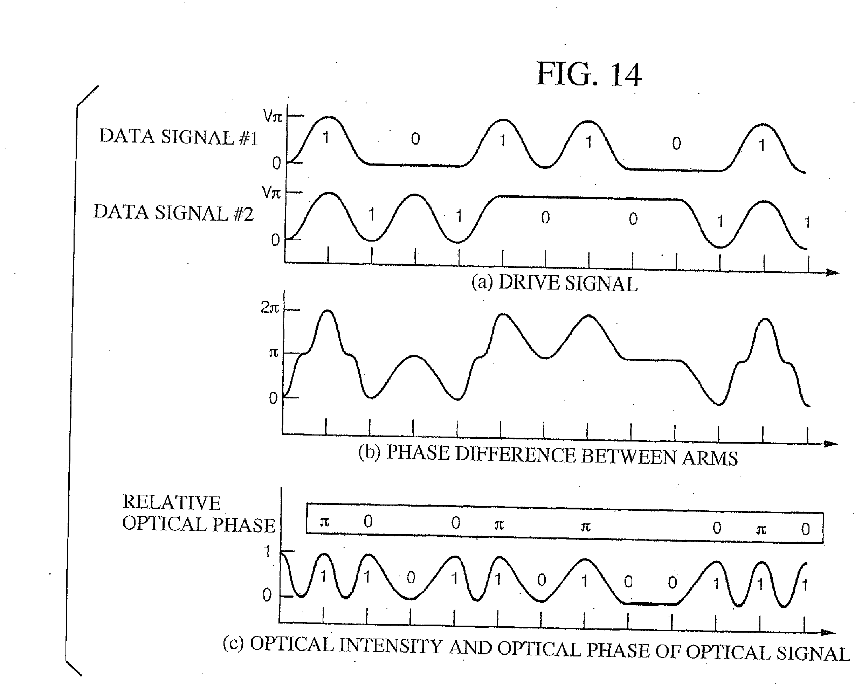

The principles of the multiplex modulation performed in the present optical transmission apparatus are shown in FIG. 13 and FIG. 14. Each figure shows an example in which multiplex modulation of two data signals is performed. FIG. 13 shows a case in which the signals are converted to RZ (Return-to-Zero) format signals with a pulse width of 1/(2A), that is a duty of 1/(2N), by the RZ converters 14-1 to 14-N. Because the signal polarity of the even numbered data signals is inverted, when both signals are "0", the phase difference between the arms is π, and the resulting optical signal is "0". If either of the data signals is "1", the phase difference between the arms is either 0 or 2π, the intensity of the resulting optical signal is "1", and the optical phase thereof is either 0 or π. As a result, the multiplex modulated optical signal is an alternating phase RZ format signal with a duty of 50%.

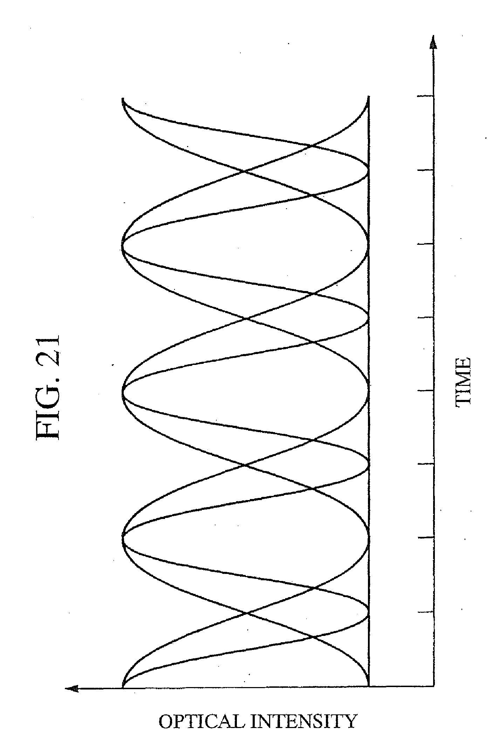

FIG. 14 shows a case in which the signals are converted to RZ (Return-to-Zero) format signals with a pulse width of 1/A, that is a duty of 1/N, by the RZ converters 14-1 to 14-N. Following the same operation as in FIG. 13, the resulting multiplex modulated optical signal is a RZ format signal with a duty which varies from 50% to 100% in alternate phases. An eye pattern is shown in FIG. 21. In FIG. 21, the duty varies between 50%, 75% and 100%.

As described above, in the optical transmission apparatus described in the present embodiment, it was possible to perform multiplex modulation of a plurality of data signals into an alternating phase RZ format optical signal or an alternating phase RZ format optical signal with a varying duty, using fewer Mach-Zehnder optical modulators than in conventional optical transmission apparatuses. As a result, it was also possible to reduce optical loss from the case in which multiplex modulation of the signals was performed with conventional Mach-Zehnder optical modulators in a cascading connection.

### (Embodiment 3)

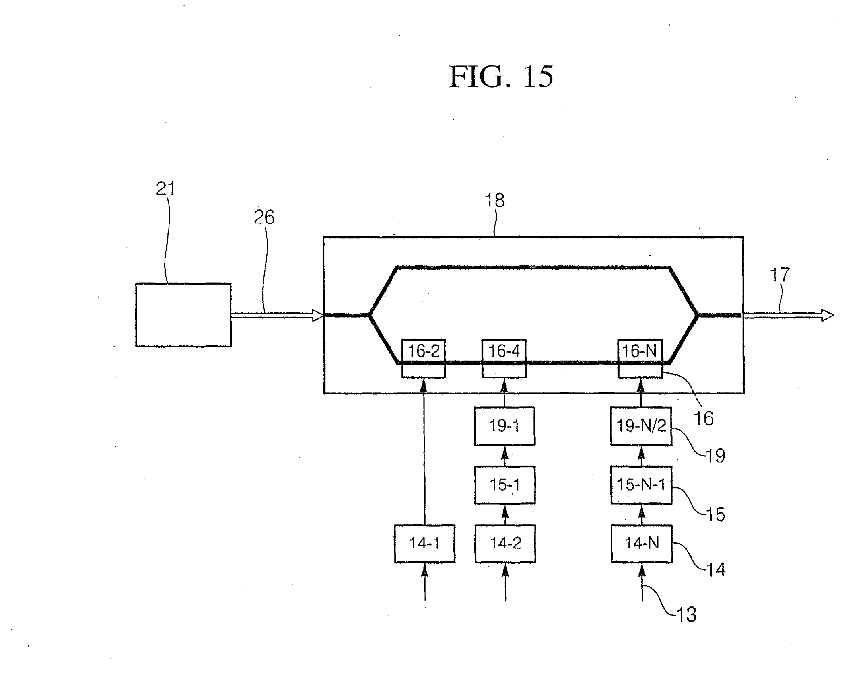

An embodiment according to a third aspect of the present invention is shown in FIG. 15. This optical communication apparatus comprises a pulse light source 21 which outputs a pulse light, a Mach-Zehnder optical modulator 18 which comprises N (where N is an even number of 2 or greater) modulating electrodes 16-1 to 16-N, N number of RZ converters 14-1 to 14-N which convert NRZ format data signals to RZ format signals, delays 15-1 to 15-(N-1) which apply a delay of (1/A) x k to the data signals in channels 2 to N, respectively, and signal polarity inverters 19 which invert the polarity of the even numbered data signals. Here, A is the bit rate of the optical signal 17, and k is an integer between 1 and N-1. In this example, the signal polarity inverters 19 were provided for the even numbered data signals, but they may also be provided for the odd numbered data signals instead. Furthermore, the order of connection of the signal polarity inverter 19, the delays 15 and the RZ converters 14 may be changed.

A pulse light 26 from the pulse light source 21 is input into the Mach-Zehnder optical modulator 18. In the case of a continuous wave, the data signals 13 of channels 1 to N are converted to RZ (Return-to-Zero) format signals with a pulse width of 1/ or less, that is a duty of 1/N or less, by the RZ converters 14-1 to 14-N, respectively. If a continuous wave is supplied from the light source, then when the pulse width is 1/A, the data signals of the optical signal 17 are NRZ format signals, and when the pulse width is 1/(2A), the data signals of the optical signal 17 are RZ format signals with a duty of 50%. However, because a pulse light and not a continuous wave is supplied from the pulse light source 21, in the present embodiment the pulse width is limited to the width of the pulse light supplied by the pulse light source 21. The applied voltage amplitude may be Vπ peak-to-peak. In addition, after the signals have been delayed by (1/A) × k by the delays 15-1 to 15-(N-1), respectively, and the signal polarity of the even numbered data signals has been inverted, the signals are modulated by the modulating electrodes 16-1 to 16-N, thereby generating an optical signal 17 with a bit rate of A.

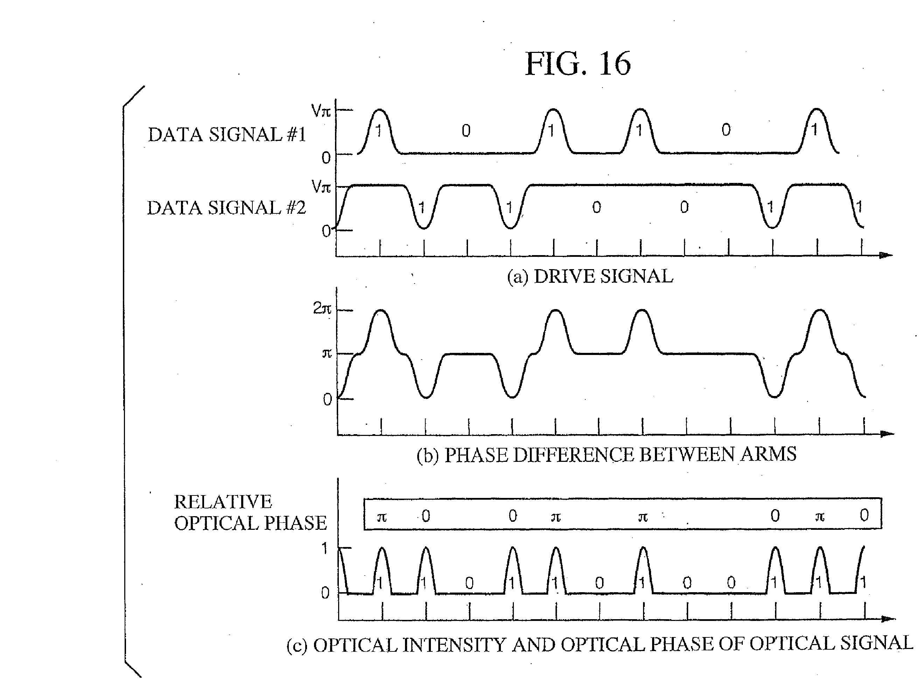

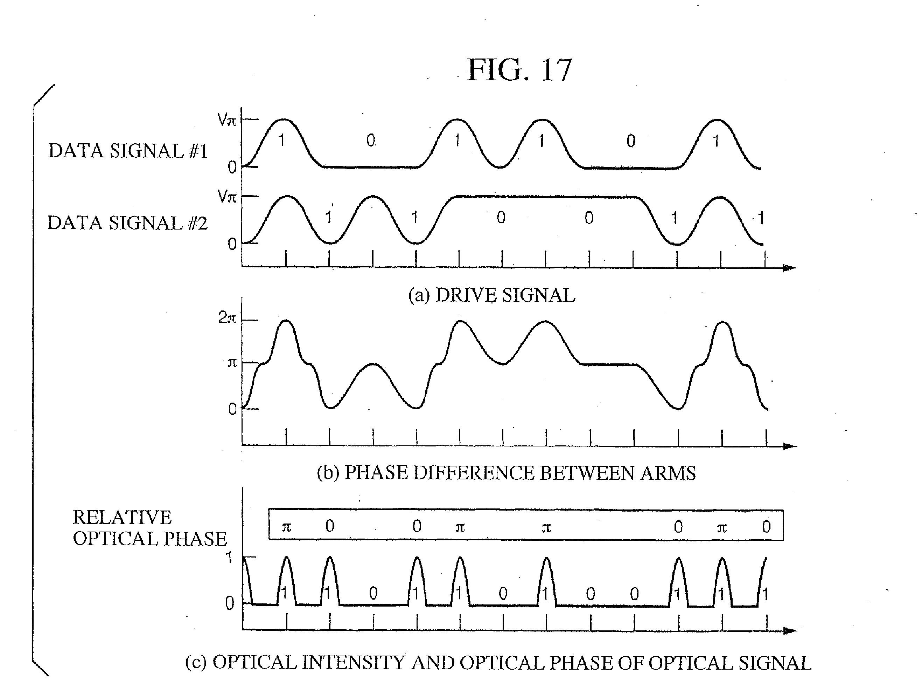

The principles of the multiplex modulation performed in the present optical transmission apparatus are shown in FIG. 16 and FIG. 17. Each figure shows an example in which multiplex modulation of two data signals is performed. The principles of the multiplex modulation are substantially the same as in embodiment 2, with the exception that the duty of the pulse is limited to the pulse width of the pulse light source. As a result, provided that the pulse width of the pulse light source is narrower than a timeslot of the multiplexed signal, the generated optical signal is a CS-RZ format signal. As a result, the same CS-RZ format optical signal is output in the examples in both FIG. 16 and FIG. 17.

As described above, in the optical transmission apparatus described in the present embodiment, it is possible to perform multiplex modulation of a plurality of data signals into a CS-RZ format optical signal using fewer Mach-Zehnder optical modulators than in conventional optical transmission apparatuses. As a result, it was also possible to reduce optical loss from the case in which multiplex modulation of the signals was performed with conventional Mach-Zehnder optical modulators in a cascading connection.

### (Embodiment 4)

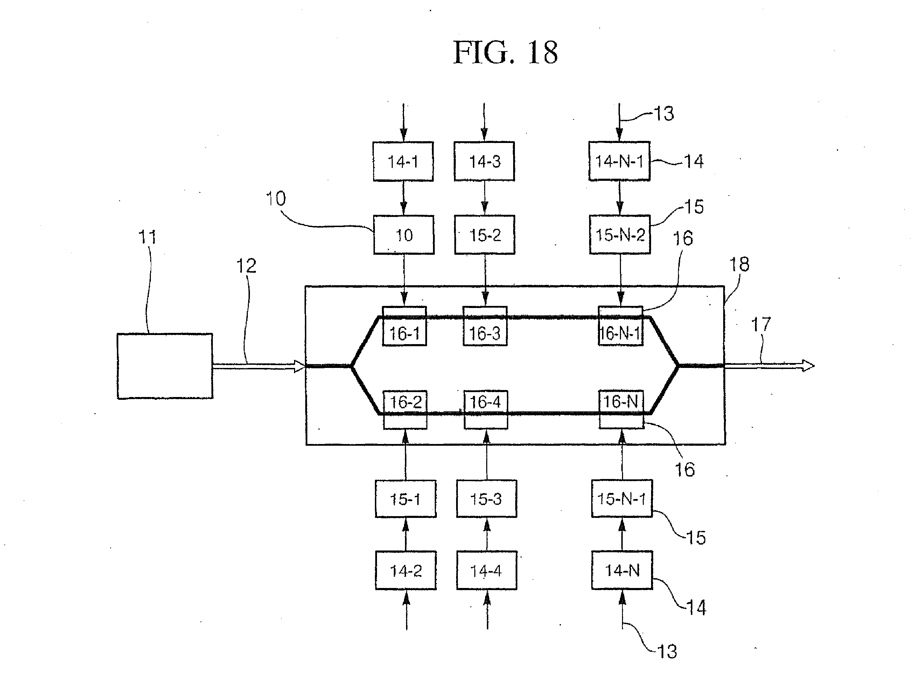

An embodiment according to a fourth aspect of the present invention is shown in FIG. 18. This optical communication apparatus comprises a continuous wave light source 11 which outputs an carrier light, a push-pull type Mach-Zehnder optical modulator 18 which comprises N (where N is an even number of 2 or greater) modulating electrodes 16-1 to 16-N, N number of RZ converters 14-1 to 14-N which convert NRZ format data signals to RZ format signals, delays 15-1 to 15-(N-1) which apply a delay of (1/A) x k to the data signals of channels 2 to N, respectively, and a bias circuit 10 which applies a bias of Vπ to one of the arms of the Mach-Zehnder optical modulator 18. The odd numbered data signals are applied to the modulating electrodes provided on one arm of the Mach-Zehnder optical modulator, and the even numbered data signals are applied to the modulating electrodes provided on the other arm of the Mach-Zehnder optical modulator. Here, A is the bit rate of the optical signal 17, k is an integer between 1 and N-1, and Vπ is the drive voltage required to shift the phase of the input light by a half wavelength. In this example, the bias circuit 10 was provided on the arm where modulation of the odd numbered data signals is performed, but it may also be provided on the opposite arm instead. Furthermore, the order of connection of the delays 15 and the RZ converters 14 may be changed.

An carrier light 12 from the continuous wave light source 11 is input into the Mach-Zehnder optical modulator 18, and a bias of Vπ is applied to one of the arms of the Mach-Zehnder optical modulator 18 by the bias circuit 10. The data signals 13 of channels 1 to N are each converted to a RZ (Return-to-Zero) format signals with a pulse width of 1/A or less, that is a duty of 1/N or less, by the RZ converters 14-1 to 14-N. If the pulse width is 1/A, the resulting data signals of the optical signal 17 are RZ format signals with varying duties, and if the pulse width is 1/(2A), the resulting data signals of the optical signal 17 are RZ format signals with a duty of 50%. The applied voltage amplitude may be Vπ peak-to-peak. In addition, after the signals have been delayed by (1/A) x k by the delays 15-1 to 15-(N-1), respectively, the signals are modulated by the modulating electrodes 16-1 to 16-N, thereby generating an optical signal 17 with a bit rate of A.

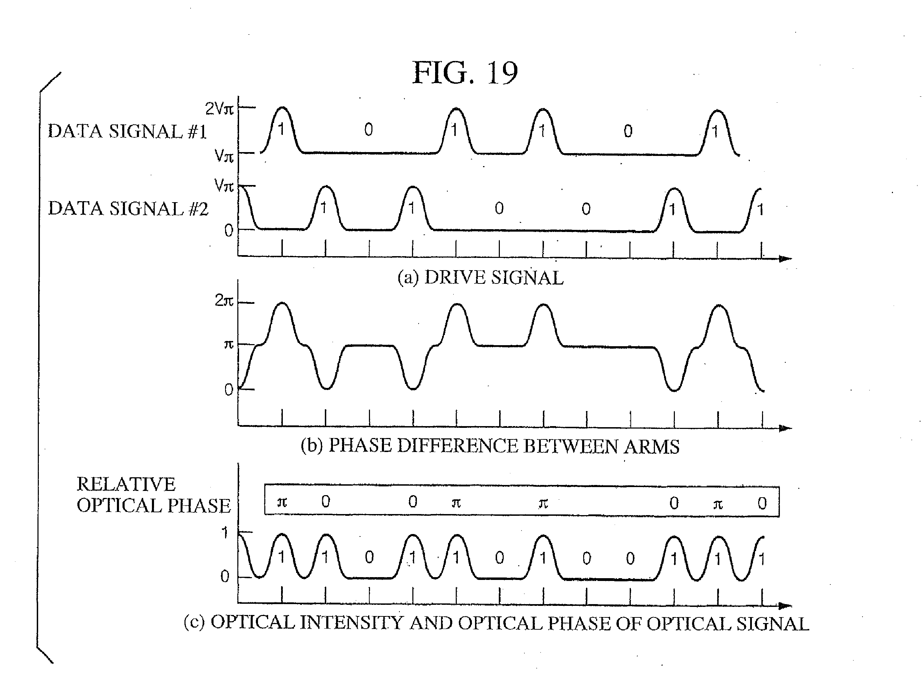

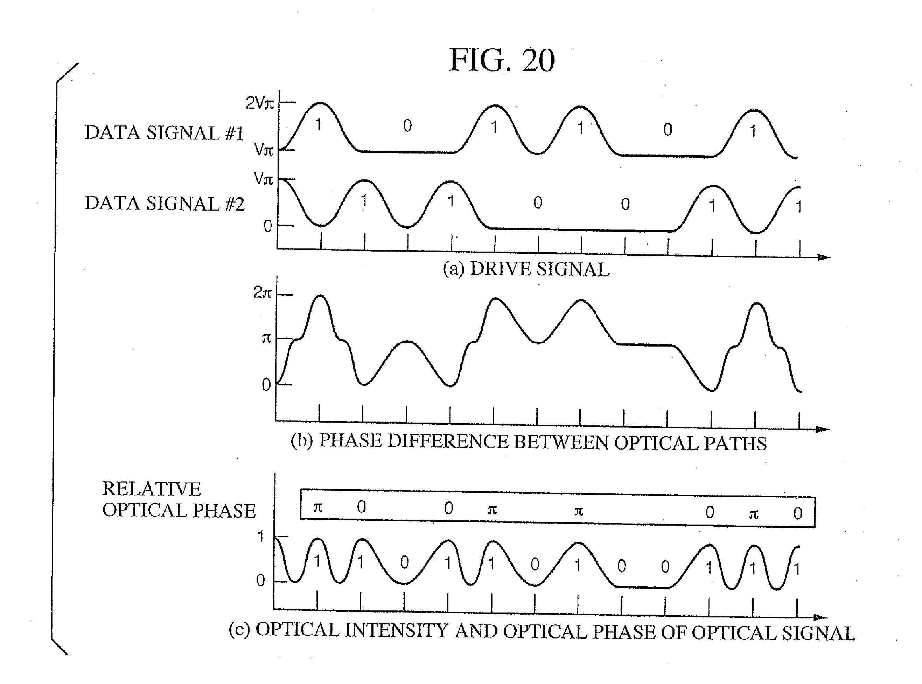

The principles of the multiplex modulation performed in the present optical transmission apparatus are shown in FIG. 19 and FIG. 20. Each figure shows an example in which multiplex modulation of two data signals is performed. FIG. 19 shows a case in which the signals are converted to RZ (Return-to-Zero) format signals with a pulse width of 1/(2A) that is a duty of 1/(2N), by the RZ converters 14-1 to 14-N. Because a bias of Vπ is applied to one of the arms of the Mach-Zehnder optical modulator 18, when both signals are "0", the phase difference between the arms is π, and the resulting optical signal is "0". When the even numbered data signal is "1", the phase difference between the arms is zero, and when the odd numbered data signal is "1", the phase difference between the arms is 2π. As a result, the resulting multiplex modulated optical signal is an alternating phase RZ format signal with a duty of 50%.

FIG. 20 shows a case in which the signals are converted to RZ (Return-to-Zero) format signals with a pulse width of 1/A, that is a duty of 1/N, by the RZ converters 14-1 to 14-N. Following the same operation as in FIG. 19, the resulting multiplex modulated optical signal is an alternating phase RZ format signal with a duty varying from 50% to 100%. An eye pattern is shown in FIG. 21. In FIG. 21, the duty varies between 50%, 75% and 100%.

As described above, in the optical transmission apparatus described in the present embodiment, it was possible to perform multiplex modulation of a plurality of data signals into an alternating phase RZ format optical signal or an alternating phase RZ format optical signal with a varying duty, using fewer Mach-Zehnder optical modulators than in conventional optical transmission apparatuses. As a result, it was also possible to reduce optical loss from the case in which multiplex modulation of the signals was performed with conventional Mach-Zehnder optical modulators in a cascading connection.

### (Embodiment 5)

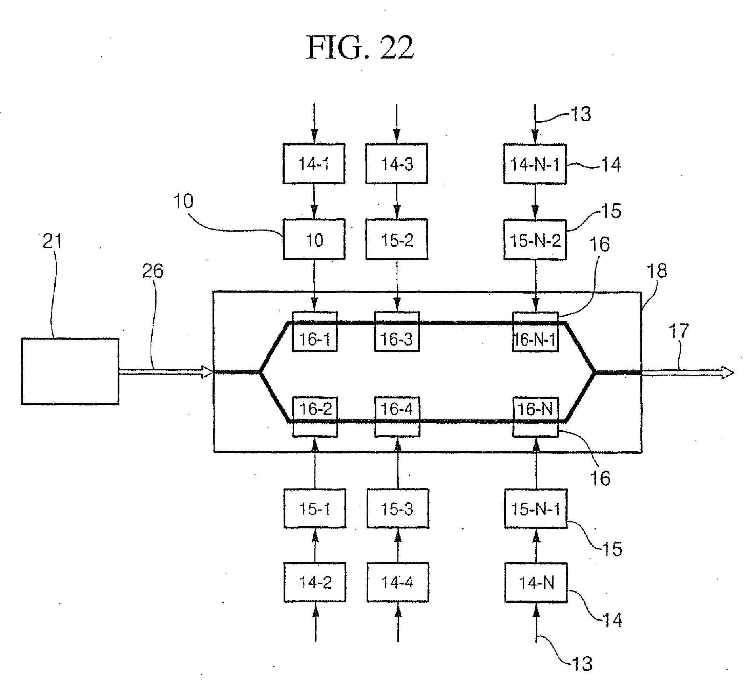

An embodiment according to a fifth aspect of the present invention is shown in FIG. 22. This optical communication apparatus comprises a pulse light source 21 which outputs a pulse light, a Mach-Zehnder optical modulator 18 which comprises N (where N is an even number of 2 or greater) modulating electrodes 16-1 to 16-N, N number of RZ converters 14-1 to 14-N which convert NRZ format data signals to RZ format signals, delays 15-1 to 15-(N-1) which apply a delay of (1/A) x k to the data signals of channels 2 to N, respectively, and a bias circuit 10 which applies a bias of Vπ to one of the arms of the Mach-Zehnder optical modulator 18. The odd numbered data signals are applied to the modulating electrodes provided on one arm of the Mach-Zehnder optical modulator, and the even numbered data signals are applied to the modulating electrodes provided on the other arm of the Mach-Zehnder optical modulator. Here, A is the bit rate of the optical signal 17, and k is an integer between 1 and N-1. In this example, the bias circuit 10 was provided on the arm where modulation of the odd numbered data signals is performed, but it may also be provided on the opposite arm instead. Furthermore, the order of connection of the delays 15 and the RZ converters 14 may be changed.

A pulse light 26 from the pulse light source 21 is input into the Mach-Zehnder optical modulator 18. If a continuous wave is supplied from the light source, the data signals 13 of channels 1 to N are converted to RZ (Return-to-Zero) format signals with a pulse width of 1/A or less, that is a duty of 1/N or less, by the RZ converters 14-1 to 14-N, respectively, and when the pulse width is 1/A, the resulting data signals of the optical signal 17 are RZ format signals with varying duties, and when the pulse width is 1/(2A), the resulting data signals of the optical signal 17 are RZ format signals with a duty of 50%. However, because a pulse light and not a continuous wave is supplied from the pulse light source 21, the pulse width is limited to the width of the pulse light supplied by the pulse light source 21. The applied voltage amplitude may be V_{π} peak-to-peak. In addition, after the signals have been delayed by (1/A) x k by the delays 15-1 to 15-(N-1), respectively, they are then modulated by the modulating electrodes 16-1 to 16-N, thereby generating an optical signal 17 with a bit rate of A.

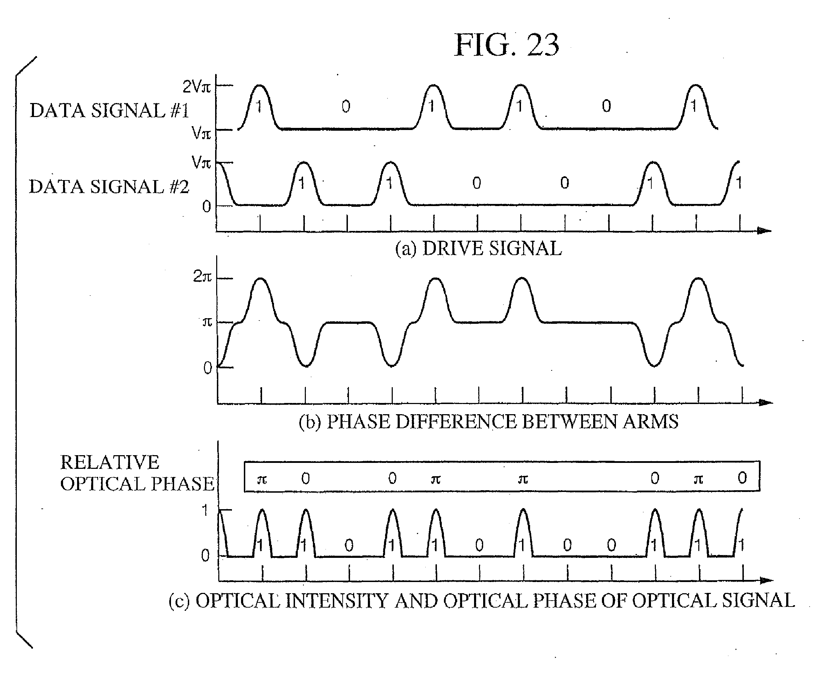

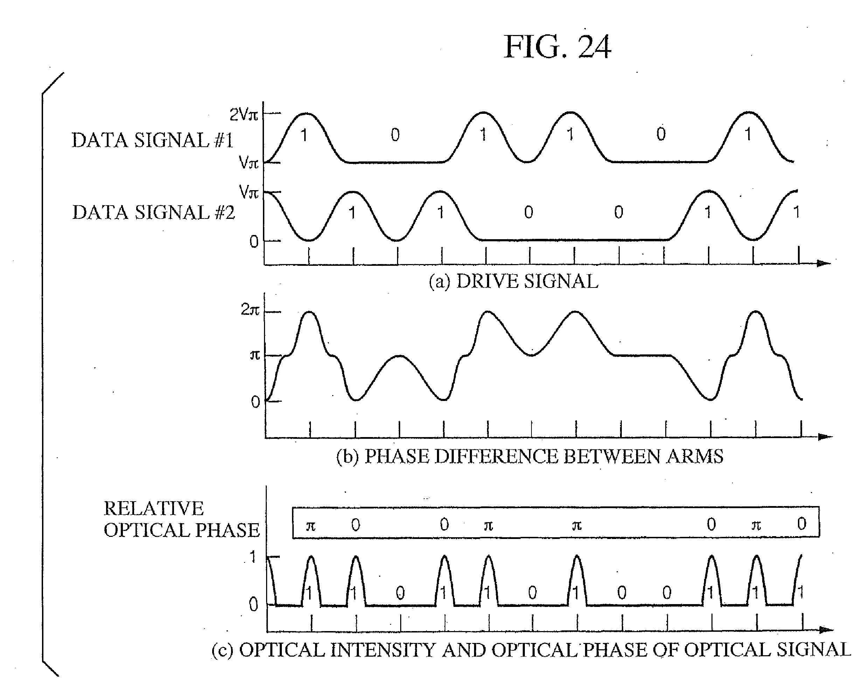

The principles of the multiplex modulation performed in the present optical transmission apparatus are shown in FIG. 23 and FIG. 24. Each figure shows an example in which multiplex modulation of two data signals is performed. The principles of the multiplex modulation are substantially the same as in embodiment 4, with the exception that the duty of the pulse is limited to the pulse width of the pulse light source. As a result, provided that the pulse width of the pulse light source is narrower than a timeslot of the multiplexed signal, the generated optical signal is a CS-RZ format signal. As a result, the same CS-RZ format optical signal is output in the examples in both FIG. 23 and FIG. 24.

As described above, in the optical transmission apparatus described in the present embodiment, it is possible to perform multiplex modulation of a plurality of data signals into a CS-RZ format optical signal using fewer Mach-Zehnder optical modulators than in conventional optical transmission apparatuses. As a result, it was also possible to reduce optical loss from the case in which multiplex modulation of the signals was performed with conventional Mach-Zehnder optical modulators in a cascading connection.

### (Embodiment 6)

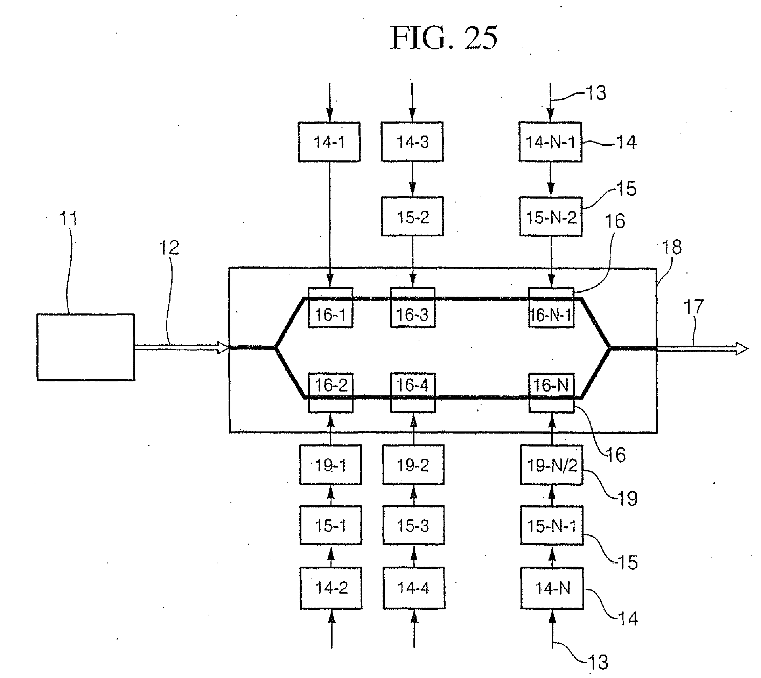

An embodiment according to a sixth aspect of the present invention is shown in FIG. 25. This optical communication apparatus comprises a continuous wave light source 11 which outputs an carrier light, a Mach-Zehnder optical modulator 18 which comprises N (where N is an integer of 2 or greater) modulating electrodes 16-1 to 16-N, N number of RZ converters 14-1 to 14-N which convert NRZ format data signals to RZ format signals, delays 15-1 to 15-(N-1) which apply a delay of (1/A) x k to the data signals of channels 2 to N, respectively, and signal polarity inverters 19 which invert the polarity of the even numbered data signals. The odd numbered data signals are applied to the modulating electrodes provided on one of the arms of the Mach-Zehnder optical modulator, and the even numbered data signals are applied to the modulating electrodes provided on the other arm of the Mach-Zehnder optical modulator. Here, A is the bit rate of an optical signal 17, and k is an integer between 1 and N-1. In this example, the signal polarity inverters 19 were provided for the even numbered data signals, but they may also be provided for the odd numbered data signals instead. Furthermore, the order of connection of the signal polarity inverters 19, the delays 15 and the RZ converters 14 may be changed.

An carrier light 12 from the continuous wave light source 11 is input into the Mach-Zehnder optical modulator 18. The data signals 13 of channels 1 to N are converted to RZ (Return-to-Zero) format signals with a pulse width of 1/A or less, that is a duty of 1/N or less, by the RZ converters 14-1 to 14-N, respectively. If the pulse width is 1/A, the data signals of the optical signal 17 become NRZ format signals, and if the pulse width is 1/(2A), the data signals of the optical signal 17 become RZ format signals with a duty of 50%. The applied voltage amplitude may be V_{π} peak-to-peak. In addition, after the signals have been delayed by (1/A) x k by the delays 15-1 to 15-(N-1), respectively, and the signal polarity of the even numbered data signals has been inverted, the signals are modulated by the modulating electrodes 16-1 to 16-N, thereby generating an optical signal 17 with a bit rate of A.

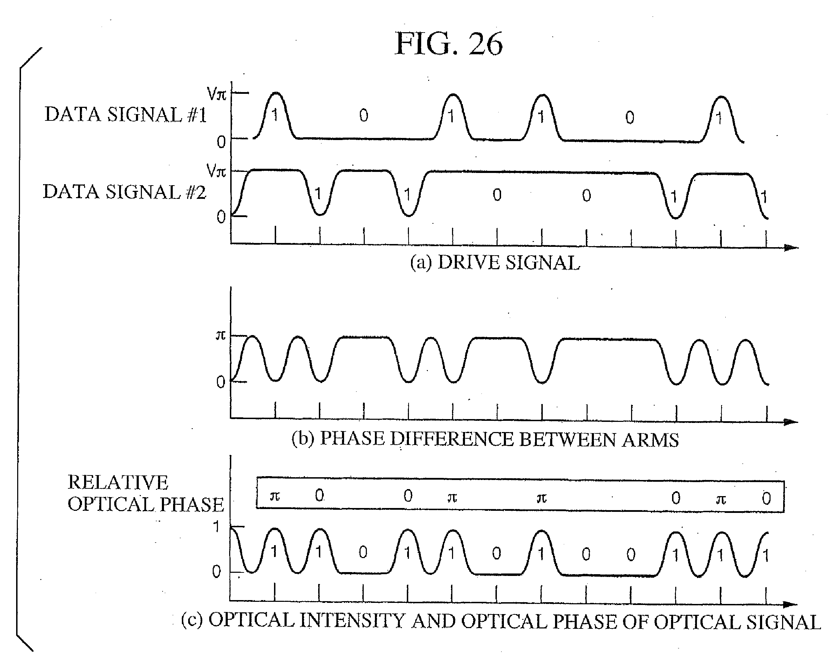

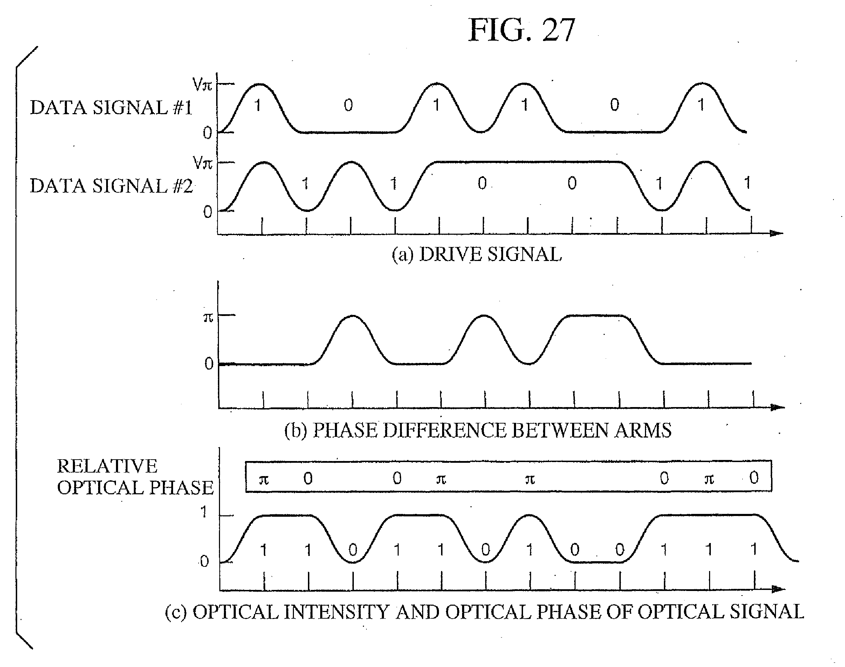

The principles of the multiplex modulation performed in the present optical transmission apparatus are shown in FIG. 26 and FIG. 27. Each figure shows an example in which multiplex modulation of two data signals is performed. FIG. 26 shows a case in which the signals are converted to RZ (Return-to-Zero) format signals with a pulse width of 1/(2A), that is a duty of 1/(2N), by the RZ converters 14-1 to 14-N. Because the signal polarity of the even numbered data signals is inverted, when both signals are "0", the phase difference between the arms is π, and the resulting optical signal is "0". When the even numbered data signal is "1", the phase difference between the arms is "0", the intensity of the resulting optical signal is "1", and the optical phase is 0, and when the odd numbered data signal is "1", the phase difference between the arms is "0", the intensity of the resulting optical signal is "1", and the optical phase is π. As a result, the generated multiplex modulated optical signal is an alternating phase RZ format signal with a duty of 50%.

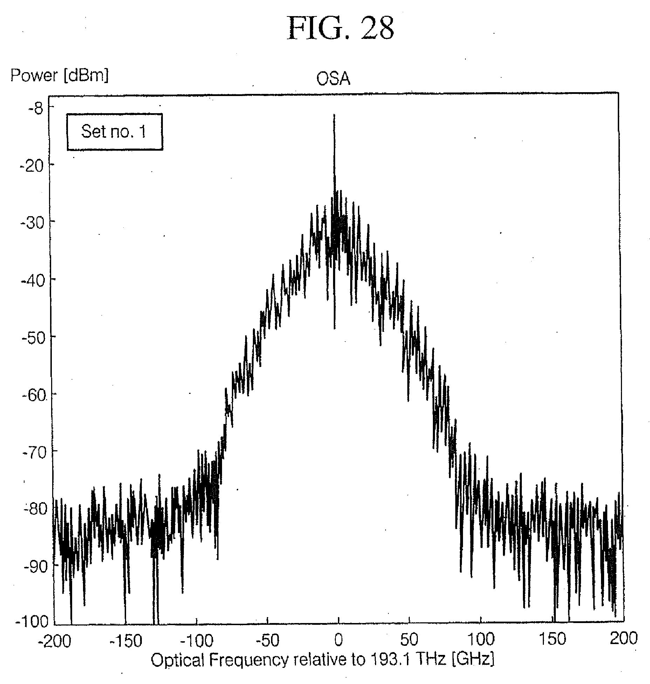

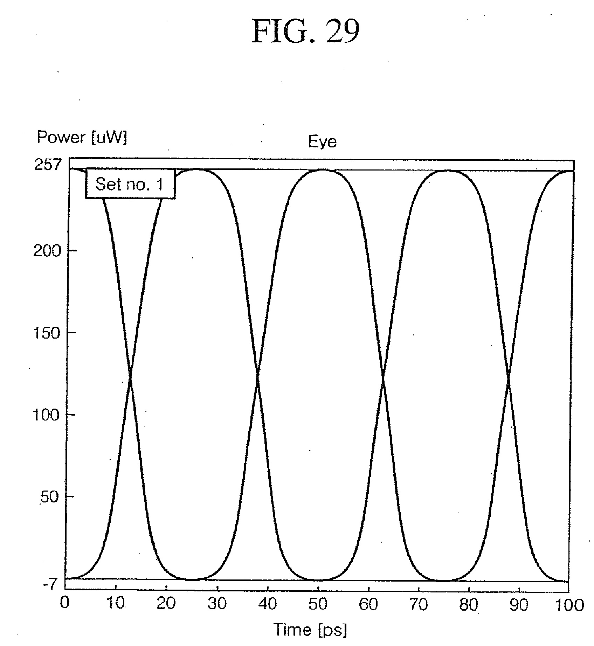

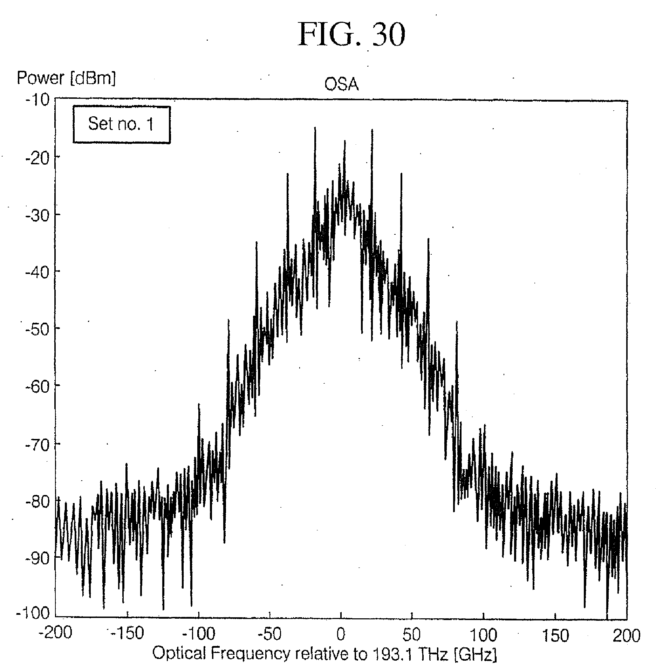

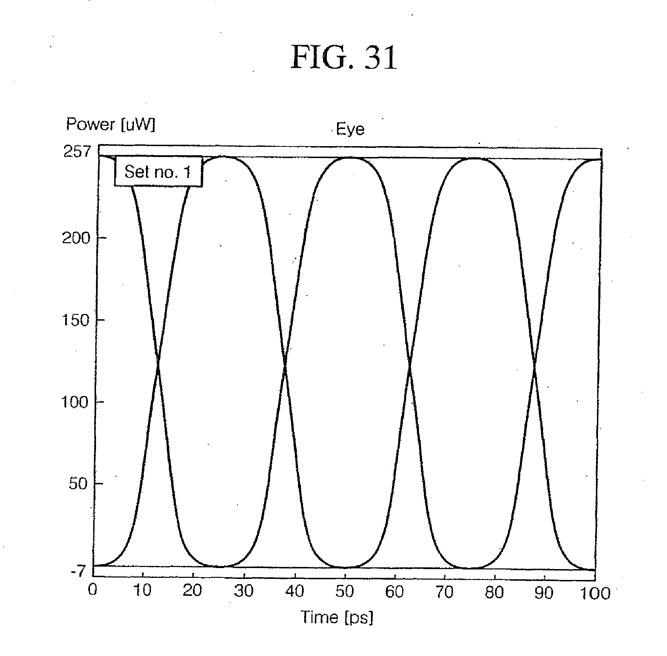

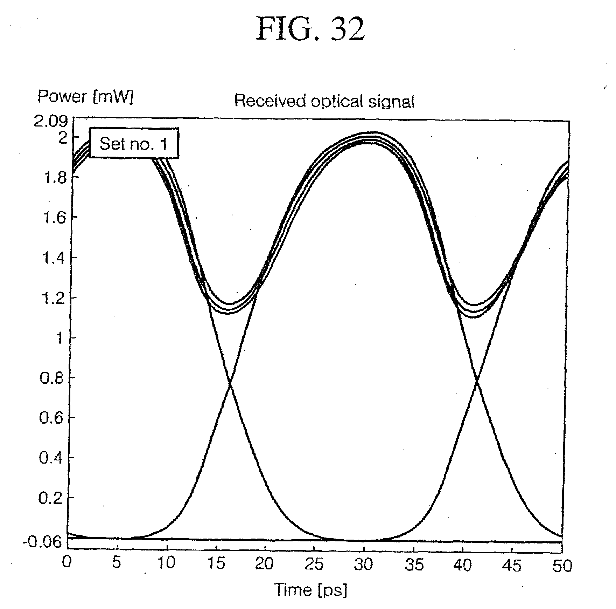

FIG. 27 shows a case in which the signals are converted to RZ (Return-to-Zero) format signals with a pulse width of 1/A, that is a duty of 1/N, by the RZ converters 14-1 to 14-N. Following the same operation as in FIG. 26, the resulting multiplex modulated optical signal is a phase modulated NRZ format signal. The optical spectrum and eye pattern of the NRZ format optical signal are shown in FIG. 28 and FIG. 29, and the optical spectrum and eye pattern of the phase modulated NRZ format optical signal are shown in FIG. 30 and FIG. 31. It is apparent that while both eye patterns are the same, in the case of the phase modulated NRZ format signal the carrier component is suppressed. Consequently, stimulated Brillouin scattering can be suppressed. Furthermore, by limiting the bandwidth of the optical signal using an optical band pass filter, it is possible to lower the optical intensity at the boundaries between bits. An eye pattern of such a situation is shown in FIG. 32. Because the peak power can be increased without increasing the average power, it is possible to increase the signal-to-noise ratio of the electrical signals after their receipt by an optical receiver.

As described above, in the optical transmission apparatus described in the present embodiment, it was possible to perform multiplex modulation of a plurality of data signals into an alternating phase RZ format or an alternating phase NRZ format optical signal using fewer Mach-Zehnder optical modulators than in conventional optical transmission apparatuses. As a result, it was also possible to reduce optical loss from the case in which multiplex modulation of the signals was performed with conventional Mach-Zehrider optical modulators in a cascading connection.

### (Embodiment 7)

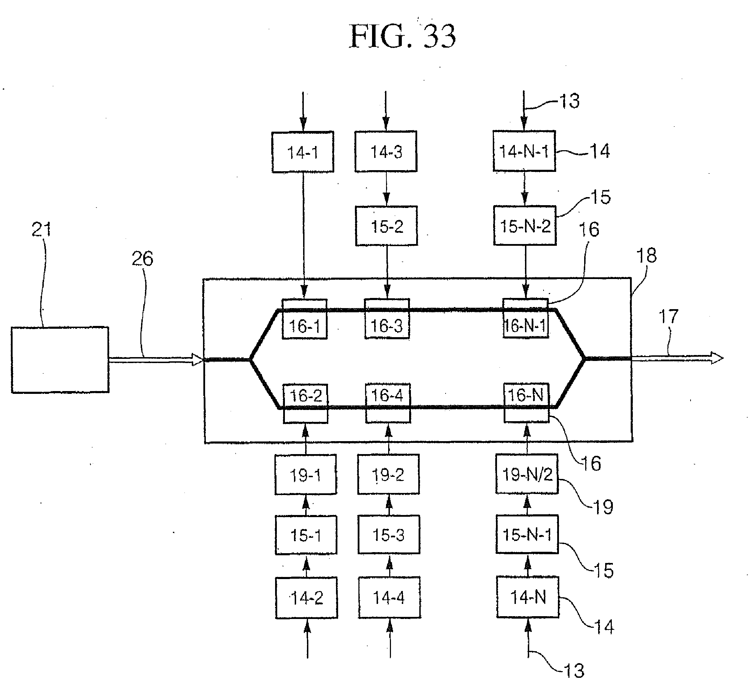

An embodiment according to a seventh aspect of the present invention is shown in FIG. 33. This optical communication apparatus comprises a pulse light source 21 which outputs a pulse light, a Mach-Zehnder optical modulator 18 which comprises N (where N is an even number of 2 or greater) modulating electrodes 16-1 to 16-N, N number of RZ converters 14-1 to 14-N which convert NRZ format data signals to RZ format signals, delays 15-1 to 15-(N-1) which apply a delay of (1/A) x k to the data signals in channels 2 to N, respectively, and signal polarity inverters 19 which invert the polarity of the even numbered data signals. The odd numbered data signals are applied to the modulating electrodes provided on one arm of the Mach-Zehnder optical modulator, and the even numbered data signals are applied to the modulating electrodes provided on the other arm of the Mach-Zehnder optical modulator. Here, A is the bit rate of the optical signal 17, and k is an integer between 1 and N-1. Furthermore, the order of connection of the signal polarity inverters 19, the delays 15 and the RZ converters 14 may be changed.

A pulse light 26 from the pulse light source 21 is input into the Mach-Zehnder optical modulator 18. If a continuous wave is supplied from the light source, the data signals 13 of the channels 1 to N are converted to RZ (Return-to-Zero) format signals with a pulse width of 1/A or less, that is a duty of 1/N or less, by the RZ converters 14-1 to 14-N, respectively. When the pulse width is 1/A, the data signals of the optical signal 17 become NRZ format signals with varying duties, and when the pulse width is 1/(2A), the data signals of the optical signal 17 become RZ format signals with a duty of 50%. However, because a pulse light and not a continuous wave is supplied from the pulse light source 21, the pulse width is limited to the width of the pulse light supplied by the pulse light source 21. The applied voltage amplitude may be Vπ peak-to-peak. In addition, after the signals have been delayed by (1/A) x k by the delays 15-1 to 15-(N-1), respectively, and the signal polarity of the even numbered data signals has been inverted, the signals are then modulated by the modulating electrodes 16-1 to 16-N of the Mach-Zehnder optical modulator 18, thereby generating an optical signal 17 with a bit rate of A.

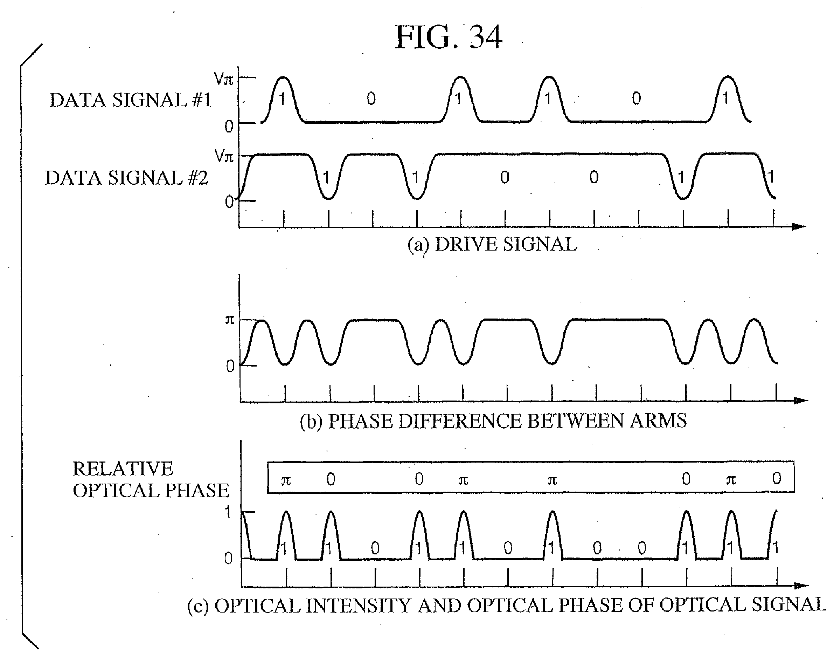

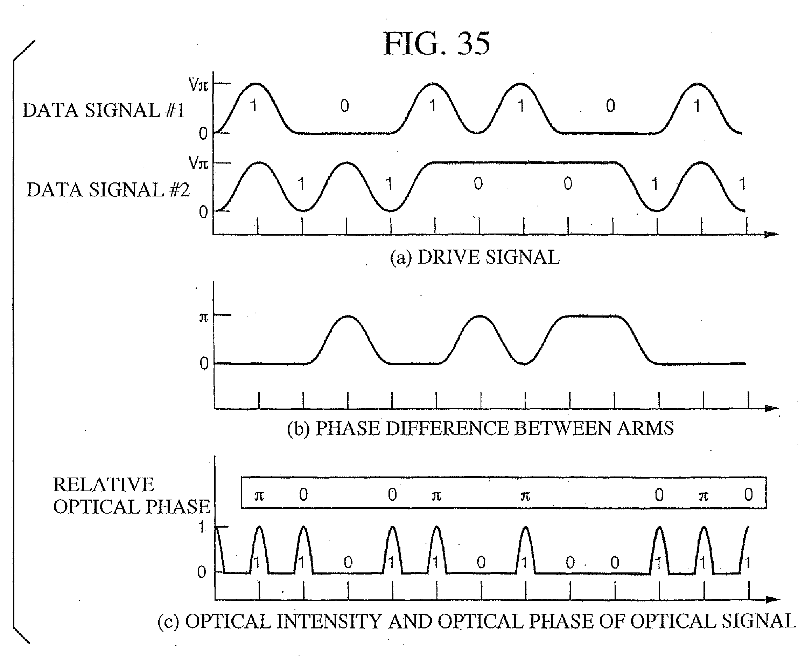

The principles of the multiplex modulation performed in the present optical transmission apparatus are shown in FIG. 34 and FIG. 35. Each figure shows an example in which multiplex modulation of two data signals is performed. The principles of the multiplex modulation are substantially the same as for embodiment 6, with the exception that the duty of the pulse is limited to the pulse width of the pulse light source. As a result, provided that the pulse width of the pulse light source is narrower than the duty in the RZ converters, the generated optical signal is a CS-RZ format signal. As a result, the same CS-RZ format optical signal is output in the examples in both FIG. 34 and FIG. 35.

As described above, in the optical transmission apparatus described in the present embodiment, it is possible to perform multiplex modulation of a plurality of data signals into a CS-RZ format optical signal using fewer Mach-Zehnder optical modulators than in conventional optical transmission apparatuses. As a result, it was also possible to reduce optical loss from the case in which multiplex modulation of the signals was performed with conventional Mach-Zehnder optical modulators in a cascading connection.

### (Embodiment 8)

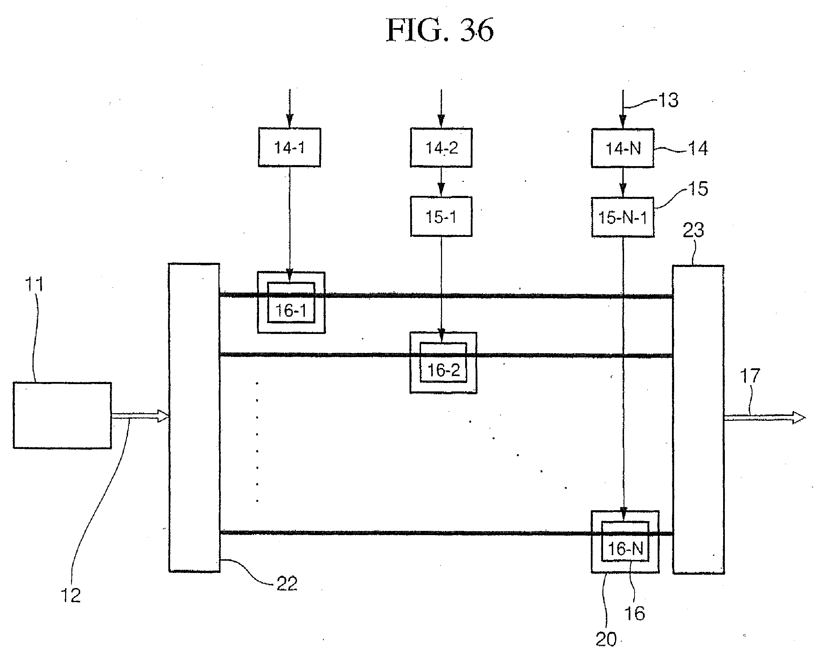

An embodiment according to an eighth aspect of the present invention is shown in FIG. 36. This optical communication apparatus comprises a continuous wave light source 11 which outputs an carrier light, an optical divider which divides the carrier light from the continuous wave light source 11 into N carrier lights (where N is an integer), N optical modulators 20 which modulate each divided carrier light divided in the optical divider with electrical signals, an optical combiner 23 which combines the optical signals from the N optical modulators, N number of RZ converters 14-1 to 14-N which convert N data signals to RZ format signals, and delays 15-1 to 15-(N-1) which apply a delay of (1/A) x k to the data signals in channels 2 to N, respectively. Here, A is the bit rate of the optical signal 17, and k is an integer between 1 and N-1. The order of connection of the delays 15 and the RZ converters 14 may be changed.

An carrier light 12 from the continuous wave light source 11 is divided and distributed to the N optical modulators 20 by the optical divider 22. The data signals 13 of channels 1 to N are converted to RZ (Return-to-Zero) format signals with a pulse width of 1/A or less, that is a duty of 1/N or less, by the RZ converters 14-1 to 14-N, respectively. After the signals have each been delayed by (1/A) x k by the delays 15-1 to 15-(N-1), they are modulated by the modulating electrodes 16-1 to 16-N in the optical modulators 20. The N modulated optical signals are then combined by the optical combiner 23, thereby generating an optical signal 17 with a bit rate of A. If the pulse width during the conversion by the RZ converters 14 is 1/A, the data signals of the optical signal 17 become NRZ format signals, and if the pulse width is 1/(2A), the data signals of the optical signal 17 become RZ format signals with a duty of 50%.

In this optical transmission apparatus, it is possible to perform multiplex modulation of N carrier lights into a high-speed optical signal, by processing in parallel and then combining the N carrier lights. Conventionally, when N carrier lights were processed in parallel, a construction was used in which after division into N carrier lights, a pulse light having undergone blanking in an optical modulator by a clock signal was modulated by a data signal in a subsequent optical modulator, and then combined by an optical combiner Accordingly in the present embodiment, it was possible to perform multiplex modulation of a plurality of data signals onto a high-speed optical signal using fewer optical modulators than in conventional optical transmission apparatuses. As a result, it was also possible to reduce optical loss from the case in which multiplex modulation of the signals was performed with conventional optical modulators in a cascading connection.

### (Embodiment 9)

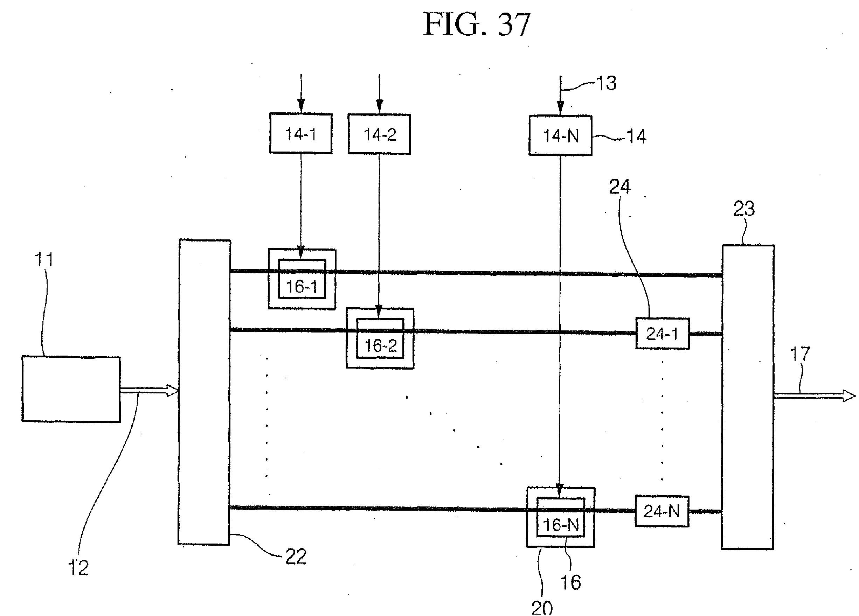

An embodiment according to a ninth aspect of the present invention is shown in FIG. 37. This optical communication apparatus comprises a continuous wave light source 11 which outputs an carrier light, an optical divider which divides the carrier light from the continuous wave light source 11 into N carrier lights (where N is an integer), N optical modulators 20 which modulate each divided carrier light divided in the optical divider with electrical signals, optical delays 24 which apply a different delay to each optical signal from the N optical modulators, each delay differing sequentially by 1/A, an optical combiner 23 which combines the optical signals from the N delays, and N number of RZ converters 14-1 to 14-N which convert N number of data signals to RZ format signals. Here, A is the bit rate of an optical signal 17, and k is an integer between 1 and N-1. Furthermore, the order of connection of the optical modulators 20 and the optical delays 24 may be changed.

In embodiment 8, delays were applied to each data signal at the electrical level, but the present embodiment differs in that the delay is applied at the optical level. An carrier light 12 from the continuous wave light source 11 is divided and distributed to the N optical modulators 20 by the optical divider 22. The data signals 13 of channels 1 to N are converted to RZ (Return-to-Zero) format signals with a pulse width of 1/A or less, that is a duty of 1/N or less, by the RZ converters 14-1 to 14-N, respectively. After being modulated in the modulating electrodes 16-1 to 16-N of the optical modulators 20, the N modulated optical signals are combined by the optical combiner 23, thereby generating an optical signal 17 with a bit rate of A. If the pulse width is 1/A during the conversion by the RZ converters 14, the data signals of the optical signal 17 become NRZ format signals, and if the pulse width is 1/(2A), the data signals of the optical signal 17 become RZ format signals with a duty of 50%.

In this optical transmission apparatus, it is possible to perform multiplex modulation of N carrier lights into a high-speed optical signal, by processing in parallel and then combining the N carrier lights. Conventionally, when N carrier lights were processed in parallel, a construction was used in which after division into N carrier lights, a pulse light having undergone blanking in an optical modulator by a clock signal was modulated by a data signal in a subsequent optical modulator, and then combined by an optical combiner. Accordingly in the present embodiment, it was possible to perform multiplex modulation of a plurality of data signals onto a high-speed optical signal using fewer optical modulators than in conventional optical transmission apparatuses. As a result, it was also possible to reduce optical loss from the case in which multiplex modulation of the signals was performed with conventional optical modulators in a cascading connection. In addition, because the delay of the data signals can be provided for by the length of the optical waveguide, a simpler construction can be employed.

### (Embodiment 10)

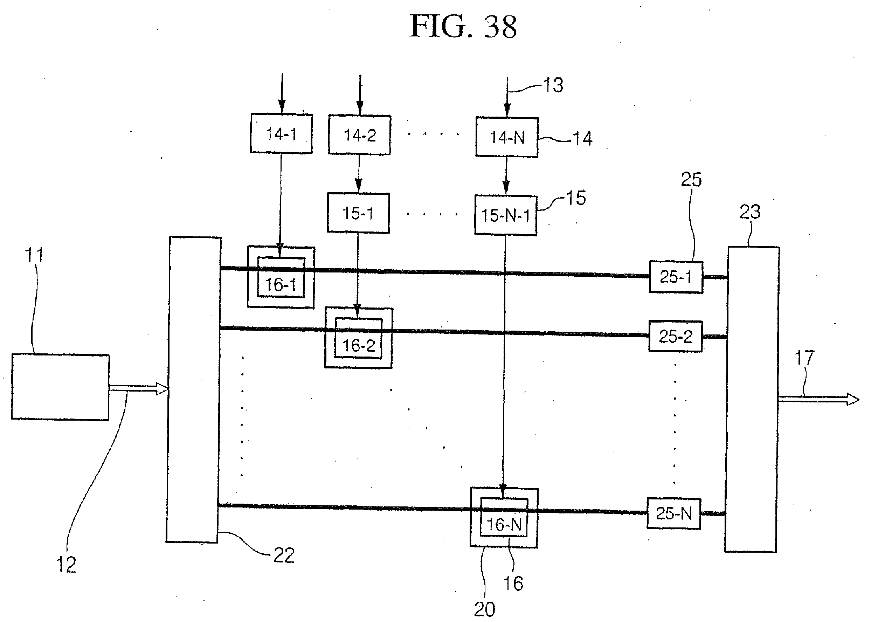

An embodiment according to a tenth aspect of the present invention is shown in FIG. 38. This optical communication apparatus comprises a continuous wave light source 11 which outputs an carrier light, an optical divider which divides the carrier light from the continuous wave light source 11 into N carrier lights (where N is an integer), N optical modulators 20 which modulate each divided carrier light divided in the optical divider with electrical signals, optical phase shifters 25 which shift the optical phase of the optical signals from the N optical modulators so as to generate a phase difference of a half period between the even numbered signals and the odd numbered signals, an optical combiner 23 which combines the optical signals from the optical phase shifters, N number of RZ converters 14-1 to 14-N which convert N number of data signals to RZ format signals, and delays 15-1 to 15-(N-1) which apply a delay of (1/A) x k to the data signals in channels 2 to N, respectively. Here, A is the bit rate of the optical signal 17, and k is an integer between 1 and N-1. Furthermore, the order of connection of the delays 15 and the RZ converters, and the order of connection of the optical modulators 20 and the optical phase shifters 25, may be changed. The function of the optical phase shifter can be obtained by changing the length of the waveguide, or by changing the refractive index of the waveguide.

An carrier light 12 from the continuous wave light source 11 is divided and distributed to the N optical modulators 20 by the optical divider 22. The data signals 13 of channels 1 to N are converted to RZ (Return-to-Zero) format signals with a pulse width of 1/A or less, that is a duty of 1/N or less, by the RZ converters 14-1 to 14-N, respectively. After a delay of (1/ x k is applied to the data signals in channels 2 to N by the delays 15-1 to 15-(N-1) respectively, the signals are modulated by the modulating electrodes 16-1 to 16-N of the optical modulators 20. The optical phase shifters 25 then shift the phase of the modulated optical signals so as to generate a phase difference of a half period between the even numbered signals and the odd numbered signals. Subsequently, the optical signals are combined by the optical combiner 23, thereby generating an optical signal 17 with a bit rate of A. If the pulse width is 1/A during the conversion by the RZ converters 14, the data signals of the resulting optical signal 17 become alternating phase RZ format signals with varying duties, and if the pulse width is 1/(2A), the data signals of the resulting optical signal 17 become alternating phase RZ format signals. In each case, under conditions where the duty of the optical signal is constant, if an X cut LiNbO₃ modulator is used as the optical modulator, chirping is eliminated in the modulator and a CS-RZ format signal is generated.

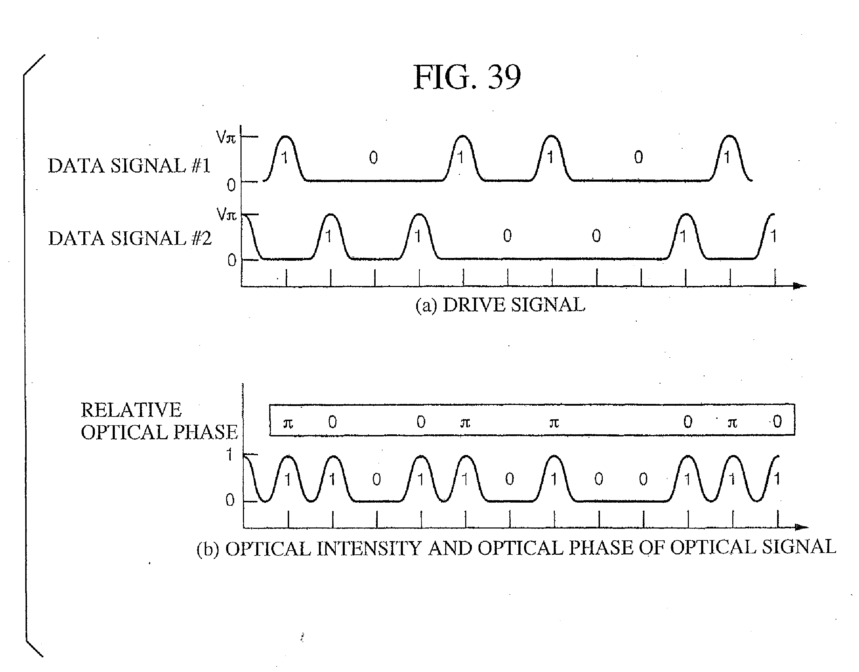

The principles of the multiplex modulation performed in the present optical transmission apparatus are shown in FIG. 39. FIG. 39 shows an example in which multiplex modulation of two data signals is performed. FIG. 39 shows a case in which the signals are converted to RZ (Return-to-Zero) format signals with a pulse width of 1/(2A), that is a duty of 1/(2N), by the RZ converters 14-1 to 14-N. Because the optical phases of the odd numbered data signals are shifted by a half period, that is π phases, the phase difference between the optical signals is π. Consequently, the resulting multiplex modulated optical signal is an RZ format signal with a duty of 50%. When the pulse width is 1/A, the optical signals are alternating phase RZ format signals with varying duties. In each case, under conditions where the duty of the optical signal is constant, if an X cut LiNbO₃ modulator is used as the optical modulator, chirping is eliminated in the modulator and a CS-RZ format signal is generated.

Accordingly in the present embodiment, it was possible to perform multiplex modulation of a plurality of data signals onto a high-speed optical signal using fewer optical modulators than in conventional optical transmission apparatuses. As a result, it was also possible to reduce optical loss from the case in which multiplex modulation of the signals was performed with conventional optical modulators in a cascading connection. In addition, because the delay of the data signals, that is the optical phase shifting process, can be achieved by simply changing the length or the refractive index of the optical waveguide, a simpler construction can be employed.

### (Embodiment 11)

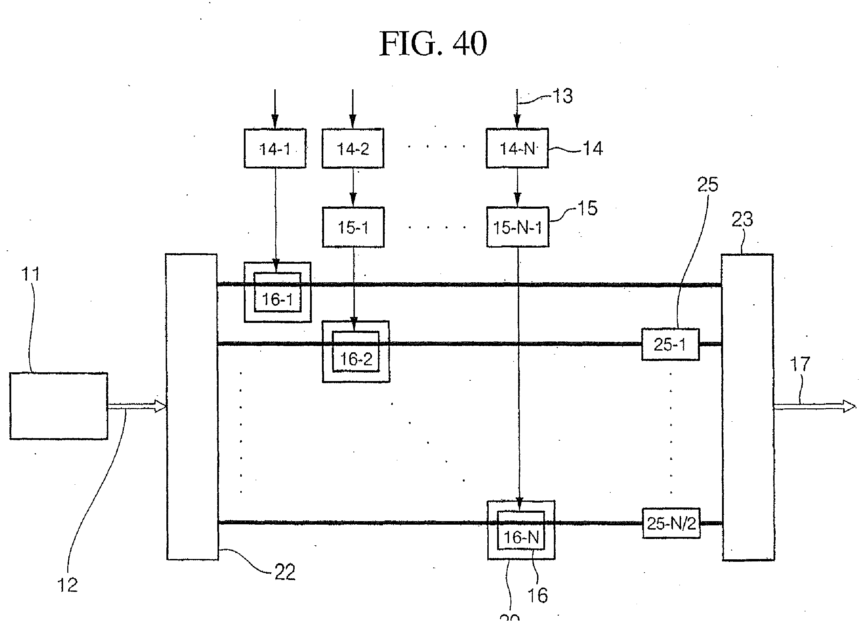

An embodiment according to an eleventh aspect of the present invention is shown in FIG. 40. This optical communication apparatus comprises a continuous wave light source 11 which outputs an carrier light, an optical divider 22 which divides the carrier light from the continuous wave light source 11 into N carrier lights (where N is an integer), N optical modulators 20 which modulate each divided carrier light divided in the optical divider with electrical signals, optical phase shifters 25 which shift the optical phase of the even numbered optical signals received from the N optical modulators by an odd multiple of a single period, an optical combiner 23 which combines the optical signals from the optical phase shifters, N number of RZ converters 14-1 to 14-N which convert N number of data signals to RZ format signals, and delays 15-1 to 15-(N-1) which apply a delay of (1/A) x k to the data signals of channels 2 to N, respectively. Here, A is the bit rate of the optical signal 17, and k is an integer between 1 and N-1. Furthermore, the order of connection of the delays 15 and the RZ converters 14 and the order of connection of the optical modulators 20 and the optical phase shifters 25 may be changed. In addition, the optical phase shifters may also shift the optical phase of the odd numbered optical signals by an odd multiple of a half period. The function of the optical phase shifter can be obtained by either changing the length of the waveguide or changing the refractive index of the waveguide.

An carrier light 12 from the continuous wave light source 11 is divided and distributed to the N optical modulators 20 by the optical divider 22. The data signals 13 of channels 1 to N are each converted to RZ (Return-to-Zero) format signals with a pulse width of 1/A or less, that is a duty of 1/N or less, by the RZ converters 14-1 to 14-N. In addition, after a delay of (1/A) x k is applied to the data signals in channels 2 to N, respectively, the signals are modulated by the modulating electrodes 16-1 to 16-N of the optical modulators 20. The optical phase shifters 25 then shift the optical phase of the optical signals obtained by modulating the even numbered data signals, so as to obtain a phase difference of a half period in the optical phase. Subsequently, the optical signals are combined by the optical combiner 23, thereby generating an optical signal 17 with a bit rate of A. If during the conversion by the RZ converters 14 the pulse width is 1/A, the data signals of the resulting optical signal 17 become alternating phase RZ format signals with varying duties, and if the pulse width is 1/(2A), the data signals of the resulting optical signal 17 become alternating phase RZ format signals. In each case, under conditions where the duty of the optical signal is constant, if an X cut LiNbO₃ modulator is used as the optical modulator, chirping is eliminated in the modulator and a CS-RZ format signal is generated.

In the present embodiment, it was possible to perform multiplex modulation of a plurality of data signals onto a high-speed optical signal using fewer optical modulators than in conventional optical transmission apparatuses. Furthermore, it was also possible to reduce optical loss from the case in which multiplex modulation of the signals was performed with conventional optical modulators in a cascading connection. In addition, because the delay of the data signals, that is the optical phase shifting process, can be achieved by simply changing the length or the refractive index of the optical waveguide, the number of optical phase shifters can be reduced by half.

### (Embodiment 12)

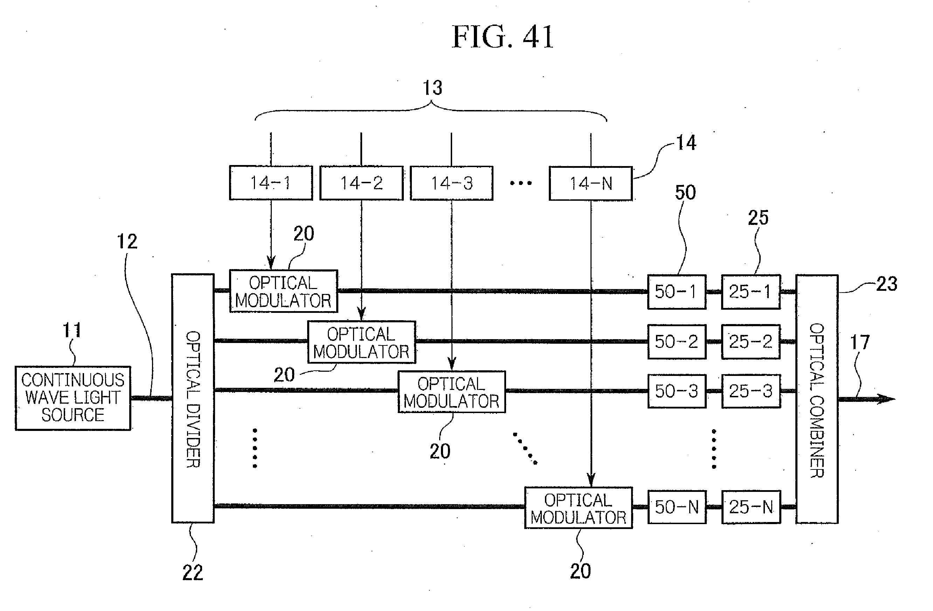

A block diagram showing an example of the construction of a twelfth embodiment according to a twelfth aspect of the present invention is shown in FIG. 41. The optical transmission apparatus of the present embodiment differs from that of the embodiment 10 in that the delay of the data signals 13 is performed at the optical level (at the stage where the signals are optical signals) instead of the electrical level (at the stage where the signals are electrical signals).

In embodiment 12, those elements of the construction which are the same as in the embodiment 10 are given the same reference numerals, and because the operation is similar, any description thereof is omitted.

In other words, in the aspect of the invention disclosed in embodiment 12, optical delays 50 (50-1 to 50-N) are provided between the optical modulators 20 and the optical phase shifters 25 (25-1 to 25-N), instead of the delays 15 (15-1 to 15-(N-1)) which were provided in the embodiment 10.

These optical delays 50 apply a delay of (1/A) x k to each of the carrier light signals 12 modulated in the channels 1 to N, respectively.

As a result, in the aspect of the invention disclosed in the twelfth embodiment, instead of electrically applying a delay to the data signals 13 by means of the delays 15 as in the embodiment 10, a delay is applied by the optical delays 50 to the carrier lights modulated by the data signals 13.

In other words, after the data signals are converted to RZ format signals by the RZ converters 14-1 to 14-N, modulation of the carrier lights 12 is performed in the modulators 20 by means of these RZ format signals.

The delaying process of the modulated carrier lights 12 is then performed by the optical delays 50, which apply a delay of (1/A) x k. Operations other than the delaying process of the carrier lights 12 performed by these optical delays 50, are performed in the same manner as in the embodiment 10.

Here, if during the conversion by the RZ converters 14 the pulse width is 1/A, the data signals of the optical signal 17 become alternating phase RZ format signals with varying duties, and if the pulse width is 1/(2A), the data signals of the optical signal 17 become alternating phase RZ format signals.

In each case, under conditions where the duty of the optical signal is constant, if an X cut LiNbO₃ modulator is used as the optical modulator, chirping is eliminated in the modulator and a CS-RZ format signal is generated.

Consequently, the optical transmission apparatus of the present invention can be realized with a simpler construction, in that in addition to the effects of embodiment 10, the delaying process of the data signals 13 can be achieved by simply adjusting the length of the optical waveguides in the optical delays 50.

### (Embodiment 13)

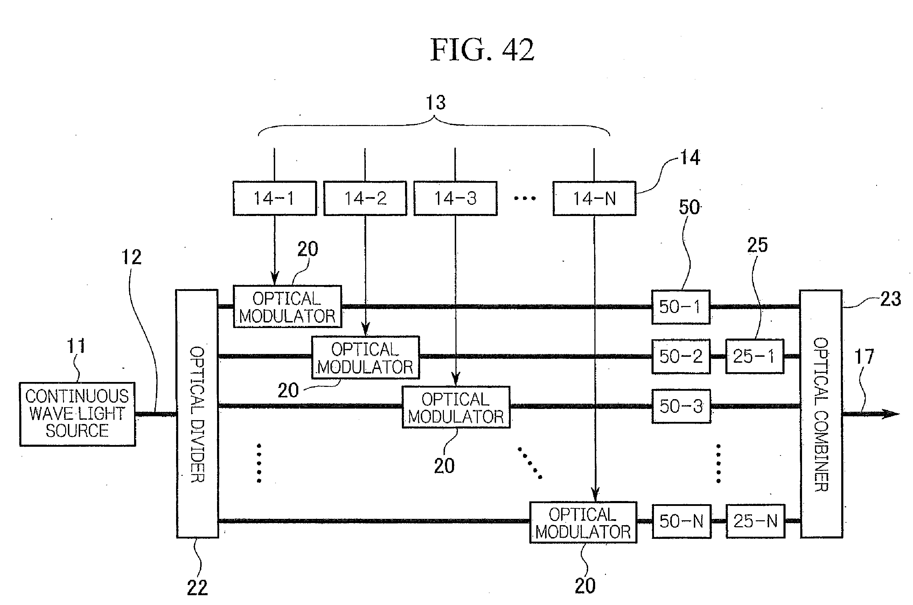

A block diagram showing an example of the construction of a thirteenth embodiment according to a thirteenth aspect of the present invention is shown in FIG. 42.

The optical transmission apparatus of the present embodiment differs from the embodiment 11 in that the delay of the data signals 13 is performed at the optical level instead of at the electrical level

In other words, in the aspect of the invention disclosed in the embodiment 13, optical delays 50 (50-1, 50-3, ..., 50-(N-1)) are provided between the optical modulators 20 and the optical combiner 23 on the waveguides corresponding with the odd numbered channels, and optical delays 50 (50-2, 50-4, ..., 50-N) are provided between the optical modulators 20 and the optical phase shifters 25 (25-1 to 25-N/2) on the waveguides corresponding with the even numbered channels, instead of the delays 15 (15-1 to 15-(N-1)) which were provided in the embodiment 11.

These optical delays 50 apply a delay of (1/A) x k to each of the carrier light signals 12 modulated in the channels 1 to N, respectively.

As a result, in the aspect of the invention disclosed in the thirteenth embodiment, delay of the data signals 13 is performed at the optical level by the optical delays 50, instead of being performed electrically by the delays 15.

In other words, after the data signals are converted to RZ format signals by the RZ converters 14-1 to 14-N, the carrier lights 12 are modulated in the modulators 20 by means of these RZ format signals, and the delaying process of the modulated carrier lights 12 is then performed by the optical delays 50, which apply a delay of (1/A) x k. Operations other than the delaying process of the carrier lights 12 performed by these optical delays 50, are performed in the same manner as in the embodiment 11.

Here, if during the conversion by the RZ converters 14 the pulse width is 1/A, the data signals of the optical signal 17 become alternating phase RZ format signals with varying duties, and if the pulse width is 1/(2A), the data signals of the optical signal 17 become alternating phase RZ format signals. In each case, under conditions where the duty of the optical signal is constant, if an X cut LiNbO₃ modulator is used as the optical modulator, chirping is eliminated in the modulator and a CS-RZ format signal is generated.

Consequently, the optical transmission apparatus of the present invention can be realized with a simpler construction, in that in addition to the effects of embodiment 11, the delaying process of the data signals 13 can be achieved by simply adjusting the length of the optical waveguides in the optical delays 50.

### (Embodiment 14)

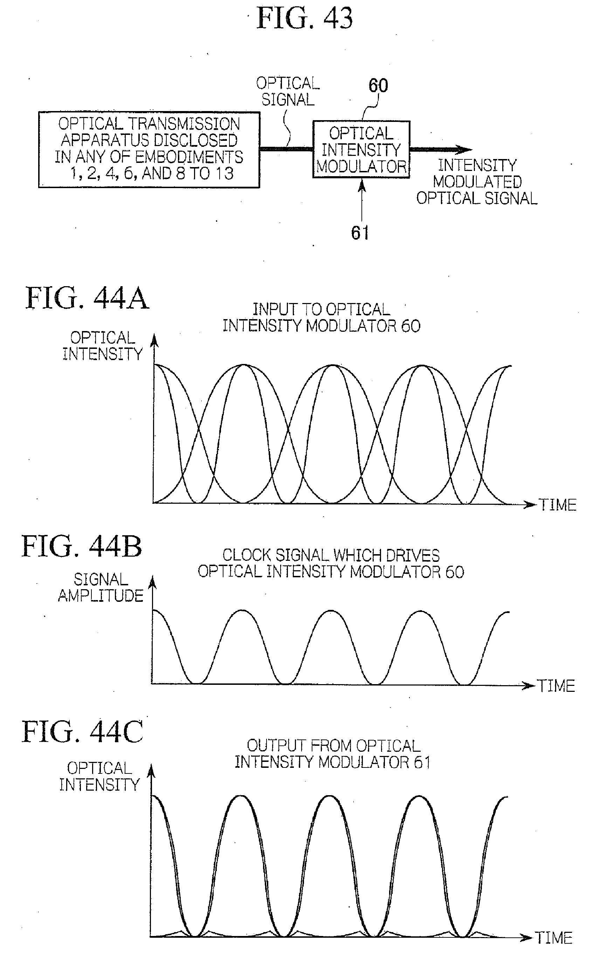

A block diagram showing a construction example of an embodiment 14 according to a fourteenth aspect of the present invention is shown in FIG. 43. The optical transmission apparatus according to the embodiment 14 of the present invention is a construction wherein after performing intensity modulation of the optical signal output from the optical transmission apparatuses disclosed in embodiments 1, 2, 4, 6, and 8 to 13 by means of an optical intensity modulator 60, an optical intensity modulated optical signal is output.

The optical intensity modulator 60 is driven by a clock signal 61 with a duty of 50% input from an external source, and by a gating operation, can generate a constant optical signal (signal light) with a duty of 50%.

An optical signal in which the phase of the light inverts for each bit and which has a duty of 50% can provide both high dispersion tolerance and high receiver sensitivity.

Furthermore, by controlling the duty of the clock signal, it is possible for the optical intensity modulator 60 to generate an optical signal with an even smaller duty.

By further reducing the duty, it is possible to improve receiver sensitivity, and it is also possible to improve the Polarization Mode Dispersion (PMD) tolerance.

The operation of the optical transmission apparatus according to the embodiment 14 is described with reference to FIGS. 44A to 44C (the horizontal axes in FIG. 44A to FIG. 44C correspond to the same length of time). FIG. 44A is a diagram showing schematically an example of an optical signal waveform of an optical signal output from the optical transmission apparatus shown in FIG. 43 (the optical transmission apparatus according to embodiments 1, 2, 4, 6 and 8 to 13). FIG. 44B is a diagram showing schematically an example of the clock signal which drives the optical intensity modulator 60. FIG. 44C is a diagram showing schematically an example of an optical waveform of an optical signal output from the optical intensity modulator 60.

By modulating the optical signal shown in FIG. 44A, in which the optical phase inverts for each bit and the duty varies in accordance with the signal pattern, using the clock signal shown in FIG. 44B, and performing a gating operation, it is possible to generate and output an optical signal as shown in FIG. 44C in which the optical phase inverts for each bit and the duty is 50%.

By varying the duty of the clock signal 61, it is possible to control the duty of the optical signal, and vary the dispersion tolerance, the polarization mode dispersion tolerance and the receiver sensitivity and the like to suit the system design.

### (Embodiment 15)

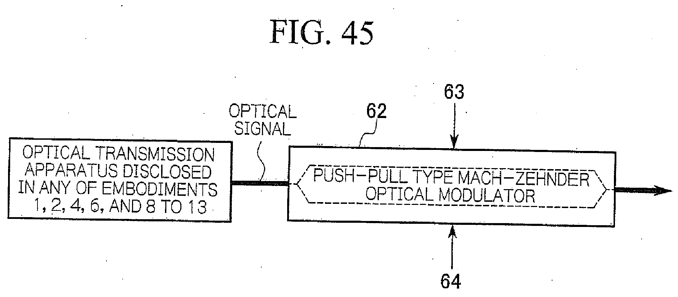

A block diagram showing an example of the construction of an embodiment 15 according to a fifteenth aspect of the present invention is shown in FIG. 45.

In the optical transmission apparatus shown in FIG. 45, a push-pull type Mach-Zehnder modulator 62 (having a similar construction to the Mach-Zehnder modulator 38-3) is used instead of the optical intensity modulator 60 which controls the duty of the optical signals in the embodiment 14.

Here, the push-pull type Mach-Zehnder modulator 62 modulates the optical signal from the optical transmission apparatus to a 01 alternating pulse light in which the phase of the optical signal inverts for every timeslot, by means of clock signals 63 and 64.

Furthermore, as described above, the push-pull operation of the push-pull type Mach-Zehnder modulator 62 by the clock signals 63 and 64 enables the duty to be controlled without the occurrence of chirping.

Here, the clock signal 63 and the clock signal 64 have opposite polarity, with a peak-to-peak (the gap between the peaks and valleys of the pulse (the clock signals 63 and 64)) amplitude of V_{π/2}, and each has a clock frequency of B/2. The amplitude Vπ refers to the voltage amplitude required to invert the phase of the optical signal (shift the phase of the optical signal by π phases), and the frequency B refers to the clock frequency of the data signal 13.

Accordingly, by using the push-pull type Mach-Zehnder modulator 62, this construction of the embodiment 15 enables the duty to be controlled without the occurrence of chirping, and allows unnecessary increases in the spectrum width of the output optical signal to be prevented.

### (Embodiment 16)

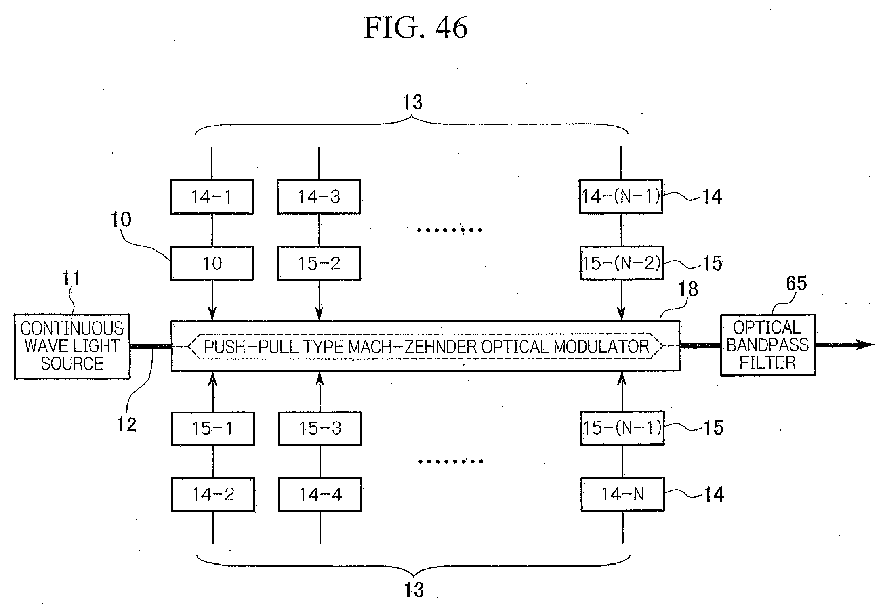

A block diagram showing an example of the construction of an embodiment 16 according to a sixteenth aspect of the present invention is shown in FIG. 46.

The optical transmission apparatus shown in FIG. 46 differs from the optical transmission apparatus according to the embodiment 4 shown in FIG. 18 only in that an optical bandpass filter 65 is added as an additional stage following the Mach-Zehnder optical modulator 18 (the internal construction of which has already been described in FIG. 18, and is omitted here), and is otherwise the same in construction and in operation.

The optical transmission apparatus of embodiment 4 shown in FIG. 18 was used as an example in FIG. 46, but any optical transmission apparatus from embodiment 1 through to embodiment 15 may be used.

The optical bandpass filter 65 has a transmission band such that all components except for the required optical signal band are blocked, and by removing the unnecessary harmonic component, can yield an improvement in spectral efficiency.

In addition, by restricting the band of the optical signal using the optical bandpass filter 65, it is possible to reduce the optical intensity at the boundaries between bits. Accordingly, it is possible to increase the peak power without increasing the average power, and also increase the signal-to-noise ratio of the electrical signals after their receipt by an optical receiver.

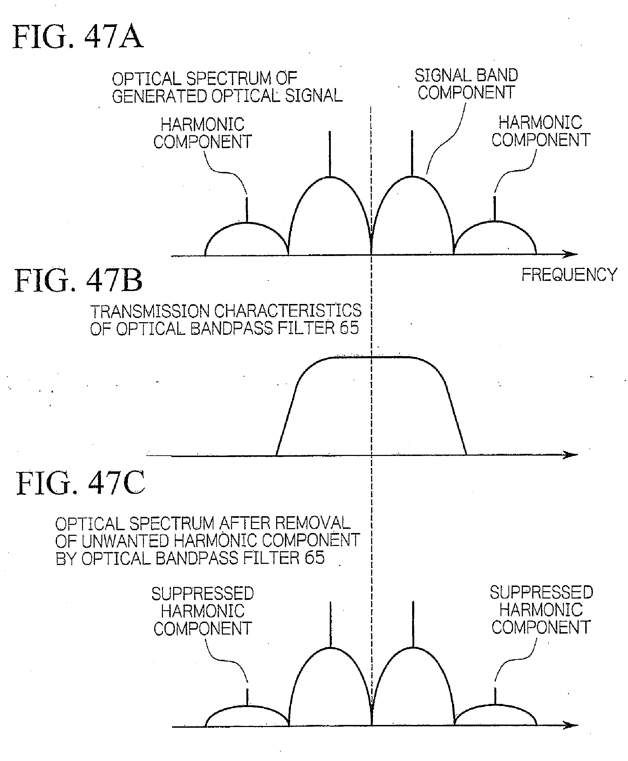

The operation of the optical transmission apparatus shown in FIG. 46 is described with reference to FIGS. 47A to 47C (the horizontal axes in these figures indicate frequency).

FIG. 47A shows schematically an example of an optical spectrum of an optical signal generated in the optical transmission apparatus shown in FIG. 46. FIG. 47B shows schematically an example of the transmission characteristics of an optical bandpass filter 65. FIG. 47C shows schematically an example of an optical spectrum of an optical signal output from the optical bandpass filter 65.

The transmission band of the optical bandpass filter 65 is set up so as to transmit the required signal band (frequency band) and remove the unnecessary harmonic component of the optical signal.

As a result, in the optical transmission apparatus shown in FIG. 46, it is possible to suppress the unnecessary harmonic component by passing the optical signal output from the Mach-Zehnder optical modulator 18 through the optical bandpass filter 65.

By employing the construction disclosed in the embodiment 16 for the optical transmission apparatus, it is possible to suppress the unnecessary harmonic component, and improve the spectral efficiency of the optical transmission apparatus.

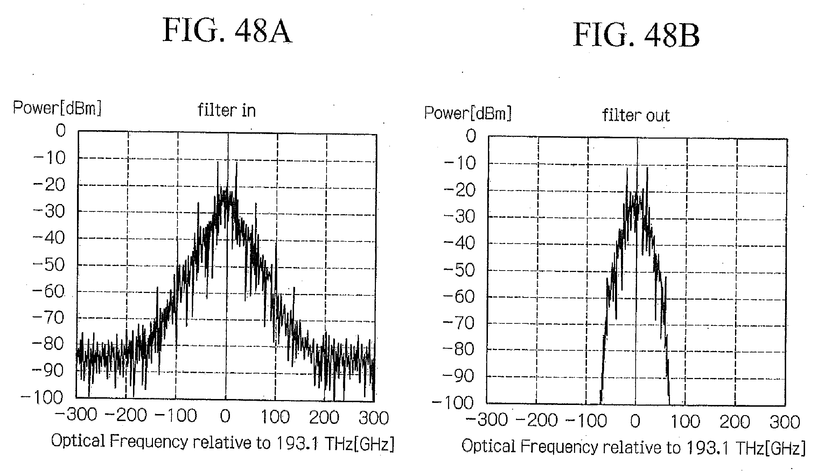

FIGS. 48A through 50 show examples of a signal spectrum and signal waveform produced when the drive signals of the Mach-Zehnder optical modulator in the optical transmission apparatus disclosed in the embodiment 16 have a duty of 50%. FIG. 48A shows the optical spectrum of an optical signal produced when optical band limitation is not performed, and FIG. 48B shows the optical spectrum of an optical signal produced when optical band limitation is performed.

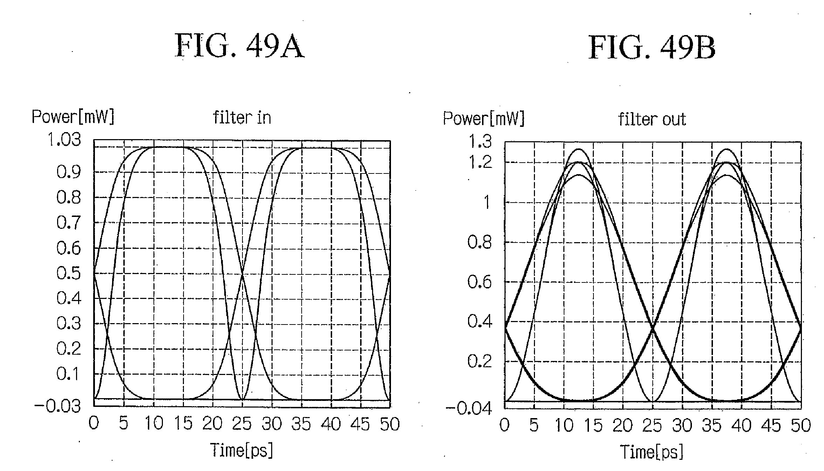

Here, a transmission band is used in the optical bandpass filter 65 which is 1.75 times the bit rate, and can remove the corresponding harmonic component. Furthermore, FIG. 49A shows the optical waveform of an optical signal produced in a case where optical band limitation is not performed, and FIG. 49B shows the optical waveform of an optical signal produced in a case where optical band limitation is performed.

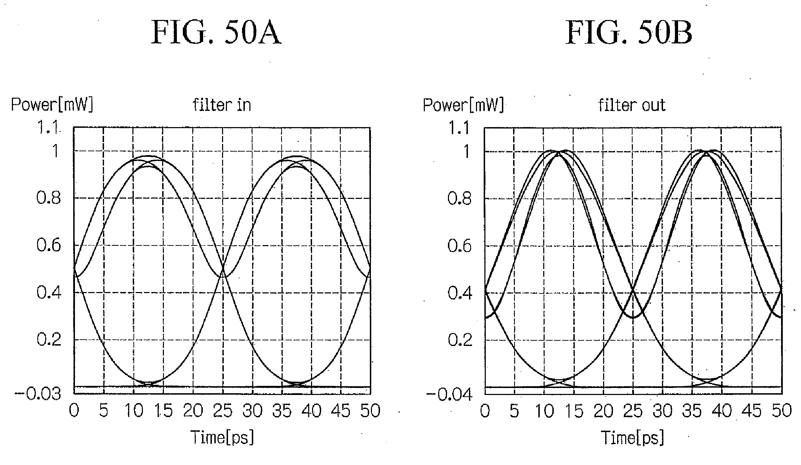

FIG. 50 shows an electrical signal waveform produced when, after converting the optical signal to an electric signal the electric signal is passed through a low pass filter with a bandwidth of 75% of the bit rate, FIG. 50 (a) shows an electrical signal waveform produced in a case where optical band limitation is not performed, and FIG. 50 (b) shows an electrical signal waveform produced in a case where optical band limitation is performed.

It is apparent from a comparison of FIG. 48A and FIG. 48B that by removing the unnecessary harmonic component it is possible to constrict the occupied bandwidth of the optical signal, and because this frees some of the frequency band, a higher number of optical signals can be transmitted, and it becomes possible not only to increase spectral efficiency, but also to minimize the duty of the optical signal as shown in FIGS. 49A and 49B. Consequently, the power is concentrated within a narrow frequency range, and the peak value is higher given the same average power, yielding an improvement in transmission characteristics.

As shown in FIG. 50 (a), in a case where optical band limitation is not performed, in a signal in which the duty is not constant, if the bandwidth of the electrical signal is limited, the peak value of a pulse with a small duty is lowered, leading to a greater deterioration in characteristics in comparison with a signal with a constant duty.

However, as shown in FIG. 50 (b), in a case where optical band limitation is performed, the peak power of a pulse with a small duty in an optical signal increases relative to the peak power of a pulse with a large duty.

Consequently, according to the embodiment 16, by applying a band limitation to the electrical signal, it is possible to minimize the peak variation caused by differences in duties, and thus improve the transmission characteristics.

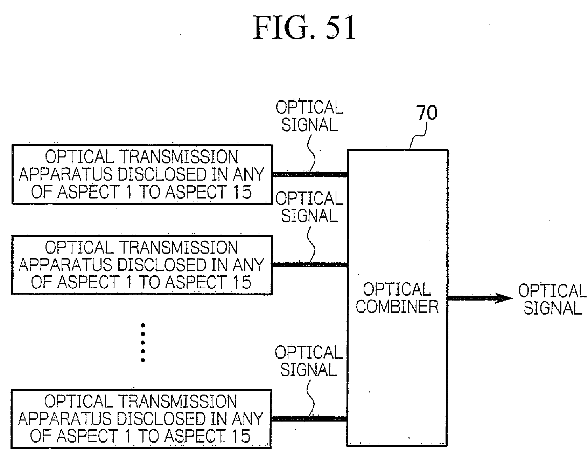

FIG. 51 is a block diagram showing an example of the construction of an embodiment 17 according to a seventeenth and eighteenth aspect of the present invention. In the optical transmission apparatus shown in FIG. 51, a plurality of the optical transmission apparatuses disclosed in embodiments 1 through 15 are arranged in parallel, and are set up so that optical signals with different wavelengths are output from the plurality of optical transmission apparatuses, and wavelength multiplexing of the plurality of output optical signals is performed by an optical combiner 70, which outputs an optical signal.

By performing wavelength multiplexing in this manner, it is possible to further increase the transmission capacity of a single optical fiber.

In the optical transmission apparatus according to the embodiment 18 shown in FIG. 51, the optical combiner 70 comprises a periodic bandpass with the characteristic of blocking all components except for the required signal bandwidth, and has the function of removing the unnecessary harmonic component.

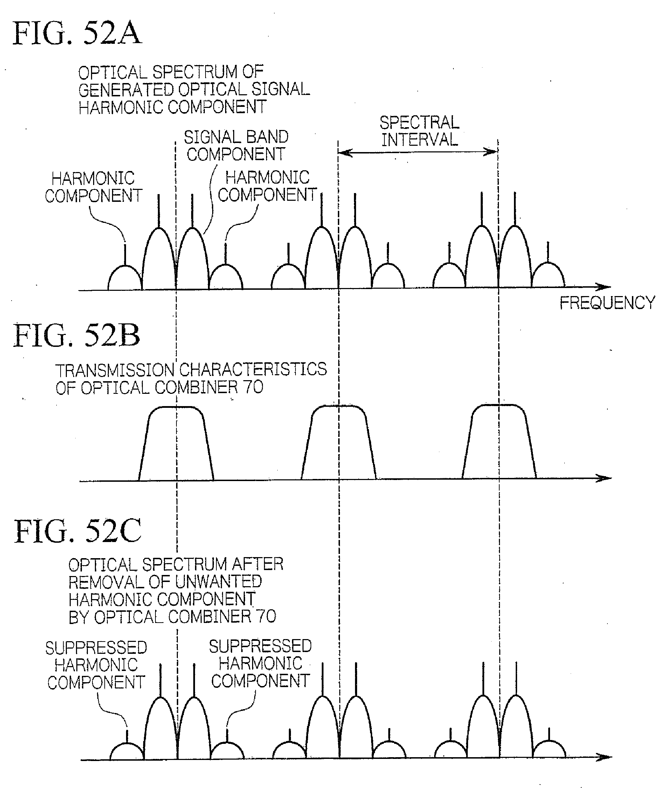

The operation of the optical transmission apparatus according to the embodiment 17 shown in FIG. 51 is described with reference to FIGS. 52A to 52C (the horizontal axes in FIGS. 52A to 52C indicate frequency). FIG. 52A shows schematically an example of an optical spectrum of an optical signal input into the optical combiner 70 shown in FIG. 51. FIG. 52B shows schematically an example of the transmission characteristics of the optical combiner 70. FIG. 52C shows schematically an example of an optical spectrum of an optical signal which has undergone wavelength multiplexing and is output by the optical combiner 70.

The periodic transmission characteristics of the optical combiner 70 are set up so as to transmit the required signal band, and remove the unnecessary harmonic component.

As a result, by passing the optical signals through the optical combiner 70, the unnecessary harmonic component in the optical signals output from each of the optical transmission apparatuses is suppressed.

By constructing the optical transmission apparatus as shown in the embodiment 17, it is possible to suppress the unnecessary harmonic component, improving spectral efficiency.

In addition, because cross-talk noise between signals with different wavelengths can be suppressed by suppressing the unnecessary harmonic component, the optical transmission apparatus according to the embodiment 17 is capable of dense wavelength division multiplexing transmission.

## Claims

1. An optical transmission apparatus in which a plurality of input electrical signals are multiplex modulated onto an optical signal with a bit rate of A, comprising:
a light source which supplies an carrier light;
an optical divider which divides the carrier light from said light source into N number of carrier lights (where N is an integer);
optical modulators which modulate a part or all of each divided carrier light divided in said optical divider with an electrical signal,
an optical combiner which combines the optical signals from said carrier light and said optical modulator, and
a device which converts said input electrical signals to RZ format signals each with a pulse width of 1/A or less, and then inputs the signals to said optical modulator.

2. An optical transmission apparatus according to claim 1, wherein said optical divider is an optical divider which divides said carrier light into two, and said optical modulator is a phase modulator which comprises a plurality of modulating electrodes arranged on one of the carrier lights which has been divided into two, and an interferometer modulator provided with a plurality of modulating electrodes on one of the arms thereof comprises said optical divider, said optical modulator and said optical combiner, and
said light source is a continuous wave light source which supplies an carrier light to said interferometer modulator as a continuous wave, and said input device are devices which convert the plurality of input electrical signals to RZ format signals each with a pulse width of 1/A or less, applies a different delay to each signal, each delay differing sequentially by 1/A, and then inputs the signals to said modulating electrodes of said interferometer modulator,
and there is provided a device which applies a half wavelength phase difference to the carrier light input to said interferometer modulator, between the two arms of the interferometer modulator.

3. An optical transmission apparatus according to claim 2, comprising an optical intensity modulator which controls a duty of a generated optical signal.

4. An optical transmission apparatus according to claim 3, wherein a push-pull type Mach-Zehnder modulator is used as said optical intensity modulator.

5. An optical transmission apparatus according to claim 4, comprising an optical bandpass filter which removes unnecessary harmonic components contained in the generated optical signal.

6. An optical transmission apparatus comprising a plurality of said optical transmission apparatuses according to claim 4 which are arranged in parallel, wherein these plurality of optical transmission apparatuses are set up so that optical signals of different wavelengths are output, and there is provided an optical combiner which combines and wavelength multiplexes the plurality of optical signals of different wavelengths output from the plurality of optical transmission apparatus and outputs an optical signal.

7. An optical transmission apparatus according to claim 6, wherein said optical combiner combines the plurality of different optical signals of different wavelengths and also blocks all components except for the required signal bandwidth so as to remove unnecessary harmonic component.

8. An optical transmission apparatus according to claim 3, comprising an optical bandpass filter which removes unnecessary harmonic components contained in the generated optical signal.

9. An optical transmission apparatus comprising a plurality of optical transmission apparatuses according to claim 3 which are arranged in parallel, wherein these plurality of optical transmission apparatuses are set up so that optical signals of different wavelengths are output, and there is provided an optical combiner which combines and wavelength multiplexes the plurality of optical signals of different wavelengths output from the plurality of optical transmission apparatus and outputs an optical signal.

10. An optical transmission apparatus according to claim 9, wherein said optical combiner combines the plurality of different optical signals of different wavelengths and also blocks all components except for the required signal bandwidth so as to remove unnecessary harmonic component.

11. An optical transmission apparatus according to claim 2, comprising an optical bandpass filter which removes unnecessary harmonic components contained in the generated optical signal.

12. An optical transmission apparatus comprising a plurality of optical transmission apparatuses according to claim 2 which are arranged in parallel, wherein these plurality of optical transmission apparatuses are set up so that optical signals of different wavelengths are output, and there is provided an optical combiner which combines and wavelength multiplexes the plurality of optical signals of different wavelengths output from the plurality of optical transmission apparatus and outputs an optical signal.

13. An optical transmission apparatus according to claim 12, wherein said optical combiner combines the plurality of different optical signals of different wavelengths and also blocks all components except for the required signal bandwidth so as to remove unnecessary harmonic component.

14. An optical transmission apparatus according to claim 1, wherein said optical divider is an optical divider which divides said carrier light into two, and said optical modulator is a phase modulator which comprises a plurality of modulating electrodes arranged on one of the carrier lights which has been divided into two, and an interferometer modulator provided with a plurality of modulating electrodes on one of the arms thereof comprises said optical divider, said optical modulator and said optical combiner, and
said light source is a continuous wave light source which supplies an carrier light to said interferometer modulator as a continuous wave, and said input devices convert the plurality of input electrical signals to RZ format signals each with a pulse width of 1 /A or less, and applies a different delay to each signal, each delay differing sequentially by 1/A, and after inverting the signal polarity of even numbered or odd numbered input electrical signals, inputs the signals to said modulating electrodes of said interferometer modulator.

15. An optical transmission apparatus according to claim 14, comprising an optical intensity modulator which controls a duty of a generated optical signal.

16. An optical transmission apparatus according to claim 15, wherein a push-pull type Mach-Zehnder modulator is used as said optical intensity modulator.

17. An optical transmission apparatus according to claim 16, comprising an optical bandpass filter which removes unnecessary harmonic components contained in the generated optical signal.

18. An optical transmission apparatus comprising a plurality of optical transmission apparatuses according to claim 16 which are arranged in parallel, wherein these plurality of optical transmission apparatuses are set up so that optical signals of different wavelengths are output, and there is provided an optical combiner which combines and wavelength multiplexes the plurality of optical signals of different wavelengths output from the plurality of optical transmission apparatus and outputs an optical signal.

19. An optical transmission apparatus according to claim 18, wherein said optical combiner combines the plurality of different optical signals of different wavelengths and also blocks all components except for the required signal bandwidth so as to remove unnecessary harmonic component.

20. An optical transmission apparatus according to claim 15, comprising an optical bandpass filter which removes unnecessary harmonic components contained in the generated optical signal.

21. An optical transmission apparatus comprising a plurality of optical transmission apparatuses according to claim 15 which are arranged in parallel, wherein these plurality of optical transmission apparatuses are set up so that optical signals of different wavelengths are output, and there is provided an optical combiner which combines and wavelength multiplexes the plurality of optical signals of different wavelengths output from the plurality of optical transmission apparatus and outputs an optical signal.

22. An optical transmission apparatus according to claim 21, wherein said optical combiner combines the plurality of different optical signals of different wavelengths and also blocks all components except for the required signal bandwidth so as to remove unnecessary harmonic component.

23. An optical transmission apparatus according to claim 14, comprising an optical bandpass filter which removes unnecessary harmonic components contained in the generated optical signal.

24. An optical transmission apparatus comprising a plurality of optical transmission apparatuses according to claim 14 which are arranged in parallel, wherein these plurality of optical transmission apparatuses are set up so that optical signals of different wavelengths are output, and there is provided an optical combiner which combines and wavelength multiplexes the plurality of optical signals of different wavelengths output from the plurality of optical transmission apparatus and outputs an optical signal.

25. An optical transmission apparatus according to claim 24, wherein said optical combiner combines the plurality of different optical signals of different wavelengths and also blocks all components except for the required signal bandwidth so as to remove unnecessary harmonic component.

26. An optical transmission apparatus according to claim 1, wherein said optical divider is an optical divider which divides said carrier light into two, and said optical modulator is a phase modulator which comprises a plurality of modulating electrodes arranged on one of the carrier lights which has been divided into two, and an interferometer modulator provided with a plurality of modulating electrodes on one of the arms thereof comprises said optical divider, said optical modulator and said optical combiner, and
said light source is a pulse light source which supplies a pulse light to said interferometer modulator, and said input devices convert the plurality of input electrical signals to RZ format signals each with a pulse width of 1/A or less, and applies a different delay to each signal, each delay differing sequentially by 1/A, and after inverting the signal polarity of even numbered or odd numbered input electrical signals, inputs the signals to said modulating electrodes of said interferometer modulator.

27. An optical transmission apparatus according to claim 26, comprising an optical bandpass filter which removes unnecessary harmonic components contained in the generated optical signal.

28. An optical transmission apparatus comprising a plurality of optical transmission apparatuses according to claim 26 which are arranged in parallel, wherein these plurality of optical transmission apparatuses are set up so that optical signals of different wavelengths are output, and there is provided an optical combiner which combines and wavelength multiplexes the plurality of optical signals of different wavelengths output from the plurality of optical transmission apparatus and outputs an optical signal.

29. An optical transmission apparatus according to claim 28, wherein said optical combiner combines the plurality of different optical signals of different wavelengths and also blocks all components except for the required signal bandwidth so as to remove unnecessary harmonic component.

30. An optical transmission apparatus according to claim 1, wherein said optical divider is an optical divider which divides said carrier light into two, and said optical modulator is a phase modulator which comprises a plurality of modulating electrodes arranged on both of the carrier lights which have been divided into two, and an interferometer modulator provided with a plurality of modulating electrodes on both of the arms thereof comprises said optical divider, said optical modulator and said optical combiner, and
said light source is a continuous wave light source which supplies an carrier light to said interferometer modulator as a continuous wave, and said input devices convert the plurality of input electrical signals to RZ format signals each with a pulse width of 1/A or less, and applies a different delay to each signal, each delay differing sequentially by 1/A, and then inputs the signals to said modulating electrodes of said interferometer modulator, and
there is provided a device which applies a half wavelength phase difference to the input light of said interferometer modulator, between the two arms of the interferometer modulator.

31. An optical transmission apparatus according to claim 30, comprising an optical intensity modulator which controls a duty of a generated optical signal.

32. An optical transmission apparatus according to claim 31, wherein a push-pull type Mach-Zehnder modulator is used as said optical intensity modulator.

33. An optical transmission apparatus according to claim 32, comprising an optical bandpass filter which removes unnecessary harmonic components contained in the generated optical signal.

34. An optical transmission apparatus according to claim 32, wherein a plurality of optical transmission apparatuses according to claim 32 are arranged in parallel, and these plurality of optical transmission apparatuses are set up so that optical signals of different wavelengths are output, and there is provided an optical combiner which combines and wavelength multiplexes the plurality of optical signals of different wavelengths output from the plurality of optical transmission apparatus and outputs an optical signal.

35. An optical transmission apparatus according to claim 34, wherein said optical combiner combines the plurality of different optical signals of different wavelengths and also blocks all components except for the required signal bandwidth so as to remove unnecessary harmonic component.

36. An optical transmission apparatus according to claim 31, comprising an optical bandpass filter which removes unnecessary harmonic components contained in the generated optical signal.

37. An optical transmission apparatus comprising a plurality of optical transmission apparatuses according to claim 31 which are arranged in parallel, wherein these plurality of optical transmission apparatuses are set up so that optical signals of different wavelengths are output, and there is provided an optical combiner which combines and wavelength multiplexes the plurality of optical signals of different wavelengths output from the plurality of optical transmission apparatus and outputs an optical signal.

38. An optical transmission apparatus according to claim 37, wherein said optical combiner combines the plurality of different optical signals of different wavelengths and also blocks all components except for the required signal bandwidth so as to remove unnecessary harmonic component.

39. An optical transmission apparatus according to claim 30, comprising an optical bandpass filter which removes unnecessary harmonic components contained in the generated optical signal.

40. An optical transmission apparatus comprising a plurality of optical transmission apparatuses according to claim 30 which are arranged in parallel, wherein these plurality of optical transmission apparatuses are set up so that optical signals of different wavelengths are output, and there is provided an optical combiner which combines and wavelength multiplexes the plurality of optical signals of different wavelengths output from the plurality of optical transmission apparatus and outputs an optical signal.

41. An optical transmission apparatus according to claim 40, wherein said optical combiner combines the plurality of different optical signals of different wavelengths and also blocks all components except for the required signal bandwidth so as to remove unnecessary harmonic component.

42. An optical transmission apparatus according to claim 1, wherein said optical divider is an optical divider which divides said carrier light into two, and said optical modulator is a phase modulator which comprises a plurality of modulating electrodes arranged on both of the carrier lights which have been divided into two, and an interferometer modulator provided with a plurality of modulating electrodes on both of the arms thereof comprises said optical divider, said optical modulator and said optical combiner, and
said light source is a pulse light source which supplies a pulse light to said interferometer modulator, and said input devices convert the plurality of input electrical signals to RZ format signals each with a pulse width of 1 /A or less, and applies a different delay to each signal, each delay differing sequentially by 1/A, and then inputs the signals to said modulating electrodes of said interferometer modulator, and
there is provided a device which applies a half wavelength phase difference to the input light of said interferometer modulator, between the two arms of the interferometer modulator.

43. An optical transmission apparatus according to claim 42, comprising an optical bandpass filter which removes unnecessary harmonic components contained in the generated optical signal.

44. An optical transmission apparatus comprising a plurality of optical transmission apparatuses according to claim 42 which are arranged in parallel, wherein these plurality of optical transmission apparatuses are set up so that optical signals of different wavelengths are output, and there is provided an optical combiner which combines and wavelength multiplexes the plurality of optical signals of different wavelengths output from the plurality of optical transmission apparatus and outputs an optical signal.

45. An optical transmission apparatus according to claim 44, wherein said optical combiner combines the plurality of different optical signals of different wavelengths and also blocks all components except for the required signal bandwidth so as to remove unnecessary harmonic component.

46. An optical transmission apparatus according to claim 1, wherein said optical divider is an optical divider which divides said carrier light into two, and said optical modulator is a phase modulator which comprises a plurality of modulating electrodes arranged on both of the carrier lights which have been divided into two, and an interferometer modulator provided with a plurality of modulating electrodes on both of the arms thereof comprises said optical divider, said optical modulator and said optical combiner, and
said light source is a continuous wave light source which supplies an carrier light to said interferometer modulator as a continuous wave, and said input devices convert the plurality of input electrical signals to RZ format signals each with a pulse width of 1/A or less, and applies a different delay to each signal, each delay differing sequentially by 1/A, and after inverting the signal polarity of even numbered or odd numbered input electrical signals, inputs the signals to said modulating electrodes of said interferometer modulator.

47. An optical transmission apparatus according to claim 46, comprising an optical intensity modulator which controls a duty of a generated optical signal.

48. An optical transmission apparatus according to claim 47, wherein a push-pull type Mach-Zehnder modulator is used as said optical intensity modulator.

49. An optical transmission apparatus according to claim 48, comprising an optical bandpass filter which removes unnecessary harmonic components contained in the generated optical signal.

50. An optical transmission apparatus comprising a plurality of optical transmission apparatuses according to claim 48 which are arranged in parallel, wherein these plurality of optical transmission apparatuses are set up so that optical signals of different wavelengths are output, and there is provided an optical combiner which combines and wavelength multiplexes the plurality of optical signals of different wavelengths output from the plurality of optical transmission apparatus and outputs an optical signal.

51. An optical transmission apparatus according to claim 50, wherein said optical combiner combines the plurality of different optical signals of different wavelengths and also blocks all components except for the required signal bandwidth so as to remove unnecessary harmonic component.

52. An optical transmission apparatus according to claim 47, comprising an optical bandpass filter which removes unnecessary harmonic components contained in the generated optical signal.

53. An optical transmission apparatus comprising a plurality of optical transmission apparatuses according to claim 47 which are arranged in parallel, wherein these plurality of optical transmission apparatuses are set up so that optical signals of different wavelengths are output, and there is provided an optical combiner which combines and wavelength multiplexes the plurality of optical signals of different wavelengths output from the plurality of optical transmission apparatus and outputs an optical signal.

54. An optical transmission apparatus according to claim 53, wherein said optical combiner combines the plurality of different optical signals of different wavelengths and also blocks all components except for the required signal bandwidth so as to remove unnecessary harmonic component.

55. An optical transmission apparatus according to claim 46, comprising an optical bandpass filter which removes unnecessary harmonic components contained in the generated optical signal.

56. An optical transmission apparatus comprising a plurality of optical transmission apparatuses according to claim 46 which are arranged in parallel, wherein these plurality of optical transmission apparatuses are set up so that optical signals of different wavelengths are output, and there is provided an optical combiner which combines and wavelength multiplexes the plurality of optical signals of different wavelengths output from the plurality of optical transmission apparatus and outputs an optical signal.

57. An optical transmission apparatus according to claim 56, wherein said optical combiner combines the plurality of different optical signals of different wavelengths and also blocks all components except for the required signal bandwidth so as to remove unnecessary harmonic component.

58. An optical transmission apparatus according to claim 1, wherein said optical divider is an optical divider which divides said carrier light into two, and said optical modulator is a phase modulator which comprises a plurality of modulating electrodes arranged on both of the carrier lights which have been divided into two, and an interferometer modulator provided with a plurality of modulating electrodes on both of the arms thereof comprises said optical divider, said optical modulator and said optical combiner, and
said light source is a pulse light source which supplies a pulse light to said interferometer modulator, and said input devices convert the plurality of input electrical signals to RZ format signals each with a pulse width of 1/A or less, and applies a different delay to each signal, each delay differing sequentially by 1/A, and after inverting the signal polarity of even numbered or odd numbered input electrical signals, inputs the signals to said modulating electrodes of said interferometer modulator.

59. An optical transmission apparatus according to claim 58, comprising an optical bandpass filter which removes unnecessary harmonic components contained in the generated optical signal.

60. An optical transmission apparatus comprising a plurality of optical transmission apparatuses according to claim 58 which are arranged in parallel, wherein these plurality of optical transmission apparatuses are set up so that optical signals of different wavelengths are output, and there is provided an optical combiner which combines and wavelength multiplexes the plurality of optical signals of different wavelengths output from the plurality of optical transmission apparatus and outputs an optical signal.

61. An optical transmission apparatus according to claim 60, wherein said optical combiner combines the plurality of different optical signals of different wavelengths and also blocks all components except for the required signal bandwidth so as to remove unnecessary harmonic component.

62. An optical transmission apparatus according to claim 1, wherein
said light source is a continuous wave light source which supplies an carrier light,
said optical divider divides the carrier light from said continuous wave light source into N number of carrier lights (where N is an integer), and there is provided N of said optical modulators, and
there is provided an optical combiner which combines the optical signals from the N number of optical modulators, and
said input devices convert the N input electrical signals to RZ format signals each with a pulse width of 1/A or less, applies a different delay to each signal, each delay differing sequentially by 1/A, and then inputs the signals to said optical modulators.

63. An optical transmission apparatus according to claim 62, comprising an optical intensity modulator which controls a duty of a generated optical signal.

64. An optical transmission apparatus according to claim 63, wherein a push-pull type Mach-Zehnder modulator is used as said optical intensity modulator.

65. An optical transmission apparatus according to claim 64, comprising an optical bandpass filter which removes unnecessary harmonic components contained in the generated optical signal.

66. An optical transmission apparatus comprising a plurality of optical transmission apparatuses according to claim 64 which are arranged in parallel, wherein these plurality of optical transmission apparatuses are set up so that optical signals of different wavelengths are output, and there is provided an optical combiner which combines and wavelength multiplexes the plurality of optical signals of different wavelengths output from the plurality of optical transmission apparatus and outputs an optical signal.

67. An optical transmission apparatus according to claim 66, wherein said optical combiner combines the plurality of different optical signals of different wavelengths and also blocks all components except for the required signal bandwidth so as to remove unnecessary harmonic component.

68. An optical transmission apparatus according to claim 63, comprising an optical bandpass filter which removes unnecessary harmonic components contained in the generated optical signal.

69. An optical transmission apparatus comprising a plurality of optical transmission apparatuses according to claim 63 wherein are arranged in parallel, wherein these plurality of optical transmission apparatuses are set up so that optical signals of different wavelengths are output, and there is provided an optical combiner which combines and wavelength multiplexes the plurality of optical signals of different wavelengths output from the plurality of optical transmission apparatus and outputs an optical signal.

70. An optical transmission apparatus according to claim 69, wherein said optical combiner combines the plurality of different optical signals of different wavelengths and also blocks all components except for the required signal bandwidth so as to remove unnecessary harmonic component.

71. An optical transmission apparatus according to claim 62; comprising an optical bandpass filter which removes unnecessary harmonic components contained in the generated optical signal.

72. An optical transmission apparatus comprising a plurality of optical transmission apparatuses according to claim 62 which are arranged in parallel, wherein these plurality of optical transmission apparatuses are set up so that optical signals of different wavelengths are output, and there is provided an optical combiner which combines and wavelength multiplexes the plurality of optical signals of different wavelengths output from the plurality of optical transmission apparatus and outputs an optical signal.

73. An optical transmission apparatus according to claim 72, wherein said optical combiner combines the plurality of different optical signals of different wavelengths and also blocks all components except for the required signal bandwidth so as to remove unnecessary harmonic component.

74. An optical transmission apparatus according to claim 1, wherein
said light source is a continuous wave light source which supplies an carrier light as a continuous wave,
said optical divider divides the carrier light from said continuous wave light source into N number of carrier lights (where N is an integer), and N of said optical modulators are provided, and the optical transmission apparatus comprises:,
optical delays which apply a different delay to each signal from the N number of optical modulators, each delay differing sequentially by 1/A, and
an optical combiner which combines the optical signals from said optical delay,
and said input devices after converting the N input electrical signals to RZ format signals each with a pulse width of 1/A or less, input the signals to said optical modulators.

75. An optical transmission apparatus according to claim 74, comprising an optical intensity modulator which controls a duty of a generated optical signal.

76. An optical transmission apparatus according to claim 75, wherein a push-pull type Mach-Zehnder modulator is used as said optical intensity modulator.

77. An optical transmission apparatus according to claim 76, comprising an optical bandpass filter which removes unnecessary harmonic components contained in the generated optical signal.

78. An optical transmission apparatus comprising a plurality of optical transmission apparatuses according to claim 76 which are arranged in parallel, wherein these plurality of optical transmission apparatuses are set up so that optical signals of different wavelengths are output, and there is provided an optical combiner which combines and wavelength multiplexes the plurality of optical signals of different wavelengths output from the plurality of optical transmission apparatus and outputs an optical signal.

79. An optical transmission apparatus according to claim 78, wherein said optical combiner combines the plurality of different optical signals of different wavelengths and also blocks all components except for the required signal bandwidth so as to remove unnecessary harmonic component.

80. An optical transmission apparatus according to claim 75, comprising an optical bandpass filter which removes unnecessary harmonic components contained in the generated optical signal.

81. An optical transmission apparatus comprising a plurality of optical transmission apparatuses according to claim 75 which are arranged in parallel, wherein these plurality of optical transmission apparatuses are set up so that optical signals of different wavelengths are output, and there is provided an optical combiner which combines and wavelength multiplexes the plurality of optical signals of different wavelengths output from the plurality of optical transmission apparatus and outputs an optical signal.

82. An optical transmission apparatus according to claim 81, wherein said optical combiner combines the plurality of different optical signals of different wavelengths and also blocks all components except for the required signal bandwidth so as to remove unnecessary harmonic component.

83. An optical transmission apparatus according to claim 74, comprising an optical bandpass filter which removes unnecessary harmonic components contained in the generated optical signal.

84. An optical transmission apparatus comprising a plurality of optical transmission apparatuses according to claim 74 which are arranged in parallel, wherein these plurality of optical transmission apparatuses are set up so that optical signals of different wavelengths are output, and there is provided an optical combiner which combines and wavelength multiplexes the plurality of optical signals of different wavelengths output from the plurality of optical transmission apparatus and outputs an optical signal.

85. An optical transmission apparatus according to claim 84, wherein said optical combiner combines the plurality of different optical signals of different wavelengths and also blocks all components except for the required signal bandwidth so as to remove unnecessary harmonic component.

86. An optical transmission apparatus according to claim 1, wherein
said light source is a continuous wave light source which supplies an carrier light as a continuous wave,
said optical divider divides the carrier light from said continuous wave light source into N number of carrier lights (where N is an integer), and N of said optical modulators are provided, and the optical transmission apparatus comprises:,
optical phase shifters which shift the phase of the light of the optical signals from said N number of optical modulators so as to generate a half period phase difference between even numbered signals and odd numbered signals, and
an optical combiner which combines the optical signals from said optical phase shifters,
and said input devices convert the N input electrical signals to RZ format signals each with a pulse width of 1 /A or less, applies a different delay to each signal, each delay differing sequentially by 1/A, and then inputs the signals to said optical modulators.

87. An optical transmission apparatus according to claim 86, comprising an optical intensity modulator which controls a duty of a generated optical signal.

88. An optical transmission apparatus according to claim 87, wherein a push-pull type Mach-Zehnder modulator is used as said optical intensity modulator.

89. An optical transmission apparatus according to claim 88, comprising an optical bandpass filter which removes unnecessary harmonic components contained in the generated optical signal.

90. An optical transmission apparatus comprising a plurality of optical transmission apparatuses according to claim 88 which are arranged in parallel, wherein these plurality of optical transmission apparatuses are set up so that optical signals of different wavelengths are output, and there is provided an optical combiner which combines and wavelength multiplexes the plurality of optical signals of different wavelengths output from the plurality of optical transmission apparatus and outputs an optical signal.

91. An optical transmission apparatus according to claim 90, wherein said optical combiner combines the plurality of different optical signals of different wavelengths and also blocks all components except for the required signal bandwidth so as to remove unnecessary harmonic component.

92. An optical transmission apparatus according to claim 87, comprising an optical bandpass filter which removes unnecessary harmonic components contained in the generated optical signal.

93. An optical transmission apparatus comprising a plurality of optical transmission apparatuses according to claim 87 which are arranged in parallel, wherein these plurality of optical transmission apparatuses are set up so that optical signals of different wavelengths are output, and there is provided an optical combiner which combines and wavelength multiplexes the plurality of optical signals of different wavelengths output from the plurality of optical transmission apparatus and outputs an optical signal.

94. An optical transmission apparatus according to claim 93, wherein said optical combiner combines the plurality of different optical signals of different wavelengths and also blocks all components except for the required signal bandwidth so as to remove unnecessary harmonic component.

95. An optical transmission apparatus according to claim 86, comprising an optical bandpass filter which removes unnecessary harmonic components contained in the generated optical signal.

96. An optical transmission apparatus comprising a plurality of optical transmission apparatuses according to claim 86 which are arranged in parallel, wherein these plurality of optical transmission apparatuses are set up so that optical signals of different wavelengths are output, and there is provided an optical combiner which combines and wavelength multiplexes the plurality of optical signals of different wavelengths output from the plurality of optical transmission apparatus and outputs an optical signal.

97. An optical transmission apparatus according to claim 96, wherein said optical combiner combines the plurality of different optical signals of different wavelengths and also blocks all components except for the required signal bandwidth so as to remove unnecessary harmonic component.

98. An optical transmission apparatus according to claim 1, wherein
said light source is a continuous wave light source which supplies an carrier light as a continuous wave,
said optical divider divides the carrier light from said continuous wave light source into N number of carrier lights (where N is an integer), and N of said optical modulators are provided, and the optical transmission apparatus comprises:
optical phase shifters which shift the optical phase of either even numbered signals or odd numbered signals received from said N number of optical modulators by an odd multiple of a half period, and
an optical combiner which combines the optical signals from said optical phase shifters,
and said input devices convert the N input electrical signals to RZ format signals each with a pulse width of 1/A or less, applies a different delay to each signal, each delay differing sequentially by 1/A, and then inputs the signals to said optical modulators.

99. An optical transmission apparatus according to claim 98, comprising an optical intensity modulator which controls a duty of a generated optical signal.

100. An optical transmission apparatus according to claim 99, wherein a push-pull type Mach-Zehnder modulator is used as said optical intensity modulator.

101. An optical transmission apparatus according to claim 100, comprising an optical bandpass filter which removes unnecessary harmonic components contained in the generated optical signal.

102. An optical transmission apparatus comprising a plurality of optical transmission apparatuses according to claim 100 which are arranged in parallel, wherein these plurality of optical transmission apparatuses are set up so that optical signals of different wavelengths are output, and there is provided an optical combiner which combines and wavelength multiplexes the plurality of optical signals of different wavelengths output from the plurality of optical transmission apparatus and outputs an optical signal.

103. An optical transmission apparatus according to claim 102, wherein said optical combiner combines the plurality of different optical signals of different wavelengths and also blocks all components except for the required signal bandwidth so as to remove unnecessary harmonic component.

104. An optical transmission apparatus according to claim 99, comprising an optical bandpass filter which removes unnecessary harmonic components contained in the generated optical signal.

105. An optical transmission apparatus comprising a plurality of optical transmission apparatuses according to claim 99 which are arranged in parallel, wherein these plurality of optical transmission apparatuses are set up so that optical signals of different wavelengths are output, and there is provided an optical combiner which combines and wavelength multiplexes the plurality of optical signals of different wavelengths output from the plurality of optical transmission apparatus and outputs an optical signal.

106. An optical transmission apparatus according to claim 105, wherein said optical combiner combines the plurality of different optical signals of different wavelengths and also blocks all components except for the required signal bandwidth so as to remove unnecessary harmonic component.

107. An optical transmission apparatus according to claim 98, comprising an optical bandpass filter which removes unnecessary harmonic components contained in the generated optical signal.

108. An optical transmission apparatus comprising a plurality of optical transmission apparatuses according to claim 98 which are arranged in parallel, wherein these plurality of optical transmission apparatuses are set up so that optical signals of different wavelengths are output, and there is provided an optical combiner which combines and wavelength multiplexes the plurality of optical signals of different wavelengths output from the plurality of optical transmission apparatus and outputs an optical signal.

109. An optical transmission apparatus according to claim 108, wherein said optical combiner combines the plurality of different optical signals of different wavelengths and also blocks all components except for the required signal bandwidth so as to remove unnecessary harmonic component.

110. An optical transmission apparatus according to claim 1, wherein
said light source is a continuous wave light source which supplies an carrier light as a continuous wave,
said optical divider divides the carrier light from said continuous wave light source into N number of carrier lights (where N is an integer), and the optical transmission apparatus comprises:
N number of optical modulators which modulate each divided carrier light divided in said optical divider with an electrical signal,
optical delays which apply a different delay to each signal from said N number of optical modulators, each delay differing sequentially by 1/A,
optical phase shifters which shift the optical phase of optical signals received from said optical delay so as to generate a difference of a half period between even numbered signals and odd numbered signals, and
an optical combiner which combines the optical signals from said optical phase shifters,
and said input device after converting the N input electrical signals to RZ format signals each with a pulse width of 1/A or less, inputs the signals to said optical modulators.

111. An optical transmission apparatus according to claim 110, comprising an optical intensity modulator which controls a duty of a generated optical signal.

112. An optical transmission apparatus according to claim 111, wherein a push-pull type Mach-Zehnder modulator is used as said optical intensity modulator.

113. An optical transmission apparatus according to claim 112, comprising an optical bandpass filter which removes unnecessary harmonic components contained in the generated optical signal.

114. An optical transmission apparatus comprising a plurality of optical transmission apparatuses according to claim 112 which are arranged in parallel, wherein these plurality of optical transmission apparatuses are set up so that optical signals of different wavelengths are output, and there is provided an optical combiner which combines and wavelength multiplexes the plurality of optical signals of different wavelengths output from the plurality of optical transmission apparatus and outputs an optical signal.

115. An optical transmission apparatus according to claim 114, wherein said optical combiner combines the plurality of different optical signals of different wavelengths and also blocks all components except for the required signal bandwidth so as to remove unnecessary harmonic component.

116. An optical transmission apparatus according to claim 111, comprising an optical bandpass filter which removes unnecessary harmonic components contained in the generated optical signal.

117. An optical transmission apparatus comprising a plurality of optical transmission apparatuses according to claim 111 which are arranged in parallel, wherein these plurality of optical transmission apparatuses are set up so that optical signals of different wavelengths are output, and there is provided an optical combiner which combines and wavelength multiplexes the plurality of optical signals of different wavelengths output from the plurality of optical transmission apparatus and outputs an optical signal.

118. An optical transmission apparatus according to claim 117, wherein said optical combiner combines the plurality of different optical signals of different wavelengths and also blocks all components except for the required signal bandwidth so as to remove unnecessary harmonic component.

119. An optical transmission apparatus according to claim 110, comprising an optical bandpass filter which removes unnecessary harmonic components contained in the generated optical signal.

120. An optical transmission apparatus comprising a plurality of optical transmission apparatuses according to claim 110 which arranged in parallel, wherein these plurality of optical transmission apparatuses are set up so that optical signals of different wavelengths are output, and there is provided an optical combiner which combines and wavelength multiplexes the plurality of optical signals of different wavelengths output from the plurality of optical transmission apparatus and outputs an optical signal.

121. An optical transmission apparatus according to claim 120, wherein said optical combiner combines the plurality of different optical signals of different wavelengths and also blocks all components except for the required signal bandwidth so as to remove unnecessary harmonic component.

122. An optical transmission apparatus according to claim 1, wherein
said light source is a continuous wave light source which supplies an carrier light as a continuous wave,
said optical divider divides the carrier light from said continuous wave light source into N number of carrier lights (where N is an integer), and the optical transmission apparatus comprises:
N number of optical modulators which modulate each divided carrier light divided in said optical divider with an electrical signal,
optical delays which apply a different delay to each signal from said N number of optical modulators, each delay differing sequentially by 1/A,
optical phase shifters which shift the optical phase of either even numbered signals or odd numbered signals received from said optical delay by an odd multiple of a half period, and
an optical combiner which combines the optical signals from said optical phase shifters,
and said input device after converting the N input electrical signals to RZ format signals each with a pulse width of 1/A or less, inputs the signals to said optical modulators.

123. An optical transmission apparatus according to claim 122, comprising an optical intensity modulator which controls a duty of a generated optical signal.

124. An optical transmission apparatus according to claim 123, wherein a push-pull type Mach-Zehnder modulator is used as said optical intensity modulator.

125. An optical transmission apparatus according to claim 124, comprising an optical bandpass filter which removes unnecessary harmonic components contained in the generated optical signal.

126. An optical transmission apparatus comprising a plurality of optical transmission apparatuses according to claim 124 which are arranged in parallel, wherein these plurality of optical transmission apparatuses are set up so that optical signals of different wavelengths are output, and there is provided an optical combiner which combines and wavelength multiplexes the plurality of optical signals of different wavelengths output from the plurality of optical transmission apparatus and outputs an optical signal.

127. An optical transmission apparatus according to claim 126, wherein said optical combiner combines the plurality of different optical signals of different wavelengths and also blocks all components except for the required signal bandwidth so as to remove unnecessary harmonic component.

128. An optical transmission apparatus according to claim 123, comprising an optical bandpass filter which removes unnecessary harmonic components contained in the generated optical signal.

129. An optical transmission apparatus comprising a plurality of optical transmission apparatuses according to claim 123 which are arranged in parallel, wherein these plurality of optical transmission apparatuses are set up so that optical signals of different wavelengths are output, and there is provided an optical combiner which combines and wavelength multiplexes the plurality of optical signals of different wavelengths output from the plurality of optical transmission apparatus and outputs an optical signal.

130. An optical transmission apparatus according to claim 129, wherein said optical combiner combines the plurality of different optical signals of different wavelengths and also blocks all components except for the required signal bandwidth so as to remove unnecessary harmonic component.

131. An optical transmission apparatus according to claim 122, comprising an optical bandpass filter which removes unnecessary harmonic components contained in the generated optical signal.

132. An optical transmission apparatus comprising a plurality of optical transmission apparatuses according to claim 122 which are arranged in parallel, wherein these plurality of optical transmission apparatuses are set up so that optical signals of different wavelengths are output, and there is provided an optical combiner which combines and wavelength multiplexes the plurality of optical signals of different wavelengths output from the plurality of optical transmission apparatus and outputs an optical signal.

133. An optical transmission apparatus according to claim 132, wherein said optical combiner combines the plurality of different optical signals of different wavelengths and also blocks all components except for the required signal bandwidth so as to remove unnecessary harmonic component.
